(19) Europäisches Patentamt
European Patent Office
Office européen des brevets

(11) **EP 2 216 165 B1**

(12) **EUROPEAN PATENT SPECIFICATION**

(45) Date of publication and mention
of the grant of the patent:
**16.07.2014 Bulletin 2014/29**

(51) Int Cl.:
**B29C 65/52** *(2006.01)* **D06H 5/00** *(2006.01)*
**B05B 12/08** *(2006.01)*

(21) Application number: **10152066.6**

(22) Date of filing: **29.01.2010**

(54) **Cloth bonding apparatus and computer-readable medium storing control program for cloth bonding apparatus**

Vorrichtung zum Verbinden vom Stoff und computerlesbares Medium mit darauf gespeichertem Steuerungsprogramm für die Vorrichtung

Appareil de liaison de tissus et support lisible par un ordinateur stockant le programme de commande de l'appareil de liaison de tissus

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.02.2009 JP 2009023233**

(43) Date of publication of application:
**11.08.2010 Bulletin 2010/32**

(73) Proprietor: **Brother Kogyo Kabushiki Kaisha Nagoya-shi, Aichi 467-8561 (JP)**

(72) Inventors:
• **Yamaura, Hiroki**
  **Nagoya-shi Aichi 467-8562 (JP)**
• **Ohmura, Yoshikazu**
  **Nagoya-shi Aichi 467-8562 (JP)**
• **Yoshimoto, Naoki**
  **Nagoya-shi Aichi 467-8562 (JP)**
• **Iwakoshi, Hiroyasu**
  **Nagoya-shi Aichi 467-8562 (JP)**
• **Umeda, Kazutoshi**
  **Nagoya-shi Aichi 467-8562 (JP)**

(74) Representative: **Prüfer & Partner GbR European Patent Attorneys Sohnckestrasse 12 81479 München (DE)**

(56) References cited:
WO-A1-01/89812          CH-A- 478 279
US-A- 2 655 980         US-A- 2 664 938
US-A- 3 295 493         US-A1- 2003 010 439
US-A1- 2006 043 102     US-B1- 6 902 639

**Description**

BACKGROUND

The present invention relates to a cloth bonding apparatus and a computer-readable medium storing a control program for the same. More specifically, the present invention relates to a cloth bonding apparatus that bonds two layers of cloth and a computer-readable medium storing a control program for the same.

The cloth bonding apparatus is directed for bonding cloths with an adhesive, instead of sewing the cloths with a needle and a thread. By bonding the cloths with the adhesive, the cloth bonding apparatus can eliminate unevenness due to the thread that may be formed in the cloth surfaces when the cloths are sewn with the thread. The cloth surfaces processed by the bonding apparatus are smooth. Thus, the cloth bonding apparatus is capable of manufacturing nice and soft clothes, and the like.

The cloth bonding apparatus discharges a liquid adhesive from a nozzle. The adhesive adheres onto a cloth. Then, a worker places another cloth on the cloth onto which the adhesive has been applied. The bonding apparatus presses the two cloths in a pressurized manner. The bonding apparatus thus bonds the cloths together.

In some cases, the worker applies an adhesive to a hem of a cloth cut out in a curve to bond cloths together, using the apparatus. The worker may need to move the cloth along the curved hem of the cloth. It may be preferable that the worker is able to delicately adjust a feed speed of the cloth in accordance with the curving degree of the hem. It may also be preferable that the cloth bonding apparatus is able to adjust an amount of the adhesive to be discharged in accordance with the feed speed to uniformly apply the adhesive on the cloth. According to a flux application apparatus described in Japanese Patent Laid-Open Publication No. JP 2008-62301, a worker inputs a feed speed form an input device before starting work. This apparatus applies a flux to a target as the apparatus feeds the target at the feed speed inputted by the worker. This apparatus adjusts a spraying amount of the flux in accordance with the feed speed. Thus, this apparatus may apply a uniform thickness of the flux on the target.

Documents US 6 902 639 B1 and US 2006/043102 A1 disclose an apparatus suitable for bonding cloth. The apparatus comprises a nozzle from which an adhesive is discharged onto a first layer, a feeding portion adapted to press and feed the first layer with a second layer in a feed direction, a direction intersecting with a direction in which the adhesive is discharged from the nozzle, a discharge amount determination portion that determines a discharge amount based on the target feed speed, the discharge amount being an amount of the adhesive to be discharged from the nozzle, and a discharge control portion that controls so that the adhesive is discharged from the nozzle by the discharge amount determined by the discharge amount determination portion.

SUMMARY

The apparatus described in the aforesaid publication applies the flux based on the feed speed inputted by the worker before starting work. Accordingly, the worker may not be able to delicately adjust the feed speed during the application work.

It is an object of the present invention to provide a cloth bonding apparatus that is capable of applying a uniform thickness of an adhesive on a cloth while a feed speed of the cloth is delicately adjusted, and a computer-readable medium storing a control program for the cloth bonding apparatus.

A first aspect of the present invention provides a cloth bonding apparatus that includes a nozzle, a feeding portion, a speed storage device, an input portion, a speed calculation portion, a feed control portion, a discharge amount determination portion, and a discharge control portion. An adhesive is dischargeable from the nozzle onto a first layer of cloth. The feeding portion is adapted to press and feed the first layer of cloth with a second layer of cloth in a cloth feed direction that intersects with a direction in which the adhesive is discharged from the nozzle. The speed storage device stores an upper limit of a feed speed, which is a speed at which the feeding portion feeds the first and second layers of cloth. An adjustment amount for adjusting the feed speed can be inputted from the input portion. The speed calculation portion calculates as a target feed speed a target value for the feed speed based on the adjustment amount inputted from the input portion and the upper limit of the feed speed stored in the speed storage device. The feed control portion controls the feeding portion so that the feeding portion feeds the cloth at the target feed speed calculated by the speed calculation portion. The discharge amount determination portion determines a discharge amount, which is an amount of the adhesive to be discharged from the nozzle, based on the target feed speed calculated by the speed calculation portion. The discharge control portion controls so that the adhesive is discharged from the nozzle by the discharge amount determined by the discharge amount determination portion.

By storing a low upper limit of the feed speed in the speed storage device, the worker can reduce a change in an actual feed speed with respect to a great change in the adjustment amount. Thus, the worker can delicately adjust the feed speed. The cloth bonding apparatus determines the amount of the adhesive to be discharged from the nozzle based on a target feed speed. Even if the target feed speed has changed, the cloth bonding apparatus can apply a uniform thickness of the adhesive on the first layer of cloth.

The cloth bonding apparatus may further include a detection portion that detects an actual feed speed, at which the feeding portion is actually feeding the first and second layers of cloth based on the target feed speed. In addition, the discharge amount determination portion may determine the discharge amount based on the actual feed speed detected by the detection portion. In such a case, the cloth bonding apparatus can apply a uniform thickness of the adhesive on the first layer of cloth, even if the target feed speed and the actual feed speed are different from each other.

The cloth bonding apparatus may further include a parameter acquisition portion that acquires a target thickness and a nozzle width, wherein the target thickness is a target value of a thickness of the adhesive to be applied on the first layer of cloth, and the nozzle width is a width of a discharge port in a direction that intersects with the cloth feed direction, the discharge port is provided in the nozzle and is a portion through which the adhesive is dischargeable. In addition, the discharge amount determination portion may determine a unit discharge amount, which is an amount of the adhesive to be discharged from the nozzle per unit time, based on the target thickness and the nozzle width acquired by the parameter acquisition portion and the target feed speed calculated by the speed calculation portion. In such a case, the cloth bonding apparatus can apply a uniform thickness of the adhesive on the first layer of cloth, even if the nozzle width and the target feed speed have changed.

The cloth bonding apparatus may further include a parameter acquisition portion that acquires a target thickness and a nozzle width, wherein the target thickness is a target value of a thickness of the adhesive to be applied on the cloth, and the nozzle width is a width of a discharge port in a direction that intersects with the cloth feed direction, the discharge port is provided in the nozzle and is a portion through which the adhesive is dischargeable. In addition, the discharge amount determination portion may determine a unit discharge amount, which is an amount of the adhesive to be discharged from the nozzle per unit time, based on the target thickness and the nozzle width acquired by the parameter acquisition portion and the actual feed speed detected by the detection portion. In such a case, the cloth bonding apparatus can apply a uniform thickness of the adhesive on the cloth, even if the nozzle width and the actual feed speed have changed.

In the cloth bonding apparatus, the detection portion may include an encoder. In such a case, the cloth bonding apparatus can detect the actual feed speed by using the encoder.

In the cloth bonding apparatus, the input portion may include a pedal. In addition, the speed calculation portion may calculate the target feed speed based on an amount by which the pedal is pressed down and the upper limit of the feed speed stored in the speed storage device. In such a case, the worker can control the feed speed of the first and second layers of cloth by adjusting the amount by which the worker steps on and presses down the pedal.

A second aspect of the present invention provides a computer-readable medium storing a control program for a cloth bonding apparatus that includes a nozzle from which an adhesive is dischargeable onto a first layer of cloth and a feeding portion adapted to press and feed the first layer of cloth with a second layer of cloth in a cloth feed direction intersecting with a direction in which the adhesive is discharged from the nozzle. The program includes instructions stored therein, that, when executed by a computer of the cloth bonding apparatus, perform a method. The method includes a speed calculation step of calculating as a target feed speed a target value of a feed speed based on an adjustment amount for adjusting the feed speed inputted from an input portion and an upper limit of the feed speed stored in a speed storage device, the feed speed being a speed at which the feeding portion feeds the first and second layers of cloth, a feed control step of controlling the feeding portion so that the feeding portion feeds the first and second layers of cloth at the calculated target feed speed, a discharge amount determination step of determining a discharge amount based on the calculated target feed speed, the discharge amount being an amount of the adhesive to be discharged from the nozzle, and a discharge control step of controlling so that the adhesive is discharged from the nozzle by the determined discharge amount.

If the worker stores a low upper limit of the feed speed in the speed storage device beforehand, when the instructions included in the control program are executed by the computer of the cloth bonding apparatus, a change in an actual feed speed can be reduced with respect to a great change in the adjustment amount. Thus, the worker can delicately adjust the feed speed. According to the control program, the amount of the adhesive to be discharged from the nozzle is determined based on a target feed speed. Therefore, even if the target feed speed has changed, a uniform thickness of the adhesive can be applied on the cloth.

The method may further include a detection step of detecting an actual feed speed at which the feeding portion is actually feeding the first and second layers of cloth based on the target feed speed, and the discharge amount determination step may determine the discharge amount based on the detected actual feed speed. In such a case, a uniform thickness of the adhesive may be applied on the first layer of cloth, even if the target feed speed and the actual feed speed are different from each other.

The method may further include a parameter acquisition step of acquiring a target thickness and a nozzle width, wherein the target thickness is a target value of a thickness of the adhesive to be applied on the first layer of cloth, and the nozzle width is a width of a discharge port in a direction that intersects with the cloth feed direction, the discharge port is provided in the nozzle and is a portion through which the adhesive is dischargeable. In addition, the discharge amount determination step may determine a unit discharge amount, which is an amount of the adhesive to be discharged from the nozzle per unit time, based on the target thickness and the nozzle width acquired at the parameter acquisition step and the target feed speed calculated at the speed calculation step. In such a case, a uniform thickness of the adhesive can be applied on the first layer of cloth, even if the nozzle width and the target feed speed have changed.

The method may further include a parameter acquisition step of acquiring a target thickness and a nozzle width, wherein the target thickness is a target value of a thickness of the adhesive to be applied on the cloth, and the nozzle width is a width of a discharge port in a direction that intersects with the cloth feed direction, the discharge port is provided in the nozzle and is a portion through which the adhesive is discharged. In addition, the discharge amount determination step may determine a unit discharge amount, which is an amount of the adhesive to be discharged from the nozzle per unit time, based on the target thickness and the nozzle width acquired at the parameter acquisition step and the actual feed speed detected at the detection step. In such a case, a uniform thickness of the adhesive can be applied on the cloth, even if the nozzle width and the actual feed speed have changed.

The speed calculation step may calculate the target feed speed based on an amount by which a pedal included in the input portion is pressed down and the upper limit of the feed speed stored in the speed storage device. In such a case, the worker can control the feed speed of the cloth by adjusting the amount by which the worker steps on and presses down the pedal.

BRIEF DESCRIPTION OF THE DRAWINGS

Exemplary embodiments of the present disclosure will be described below in detail with reference to the accompanying drawings in which:

Fig. 1 is an upper front perspective view of a cloth bonding apparatus 1;
Fig. 2 is an upper front perspective view of a bonding machine 2;
Fig. 3 is a front view of the bonding machine 2;
Fig. 4 is a left side view of the bonding machine 2 when a support portion 16 is at a use position;
Fig. 5 is a left side view of the bonding machine 2 when the support portion 16 is at a maintenance position;
Fig. 6 is an upper front perspective view of an inner configuration of the bonding machine 2;
Fig. 7 is a sectional view taken along line I-I of Fig. 2;
Fig. 8 is a sectional view taken along line II-II of Fig. 2;
Fig. 9 is a partially enlarged perspective view of a nozzle 17 and a vicinity of the nozzle 17 during bonding work;
Fig. 10 is a left side view of the bonding machine 2 during bonding work;
Fig. 11 is a block diagram showing an electrical configuration of the cloth bonding apparatus 1;
Fig. 12 is a flowchart of adhesive discharge processing;
Fig. 13 is a flowchart of adhesive discharge processing in a first modified embodiment; and
Fig. 14 is a flowchart of the adhesive discharge processing in a second modified embodiment.

DETAILED DESCRIPTION OF EXEMPLARY EMBODIMENTS

A cloth bonding apparatus 1 according to an embodiment of the present invention will be described below with reference to the drawings.

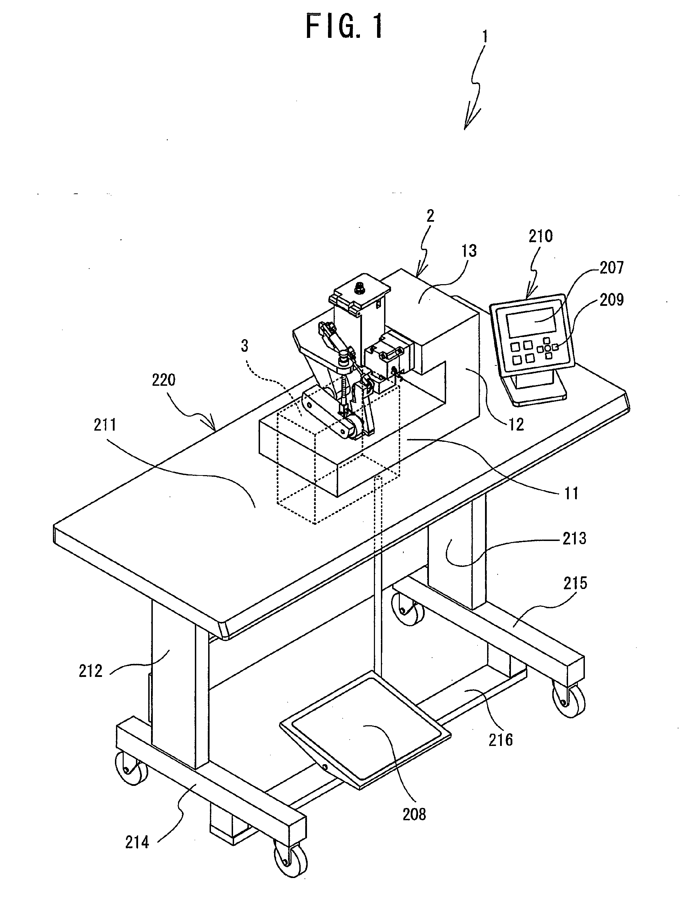

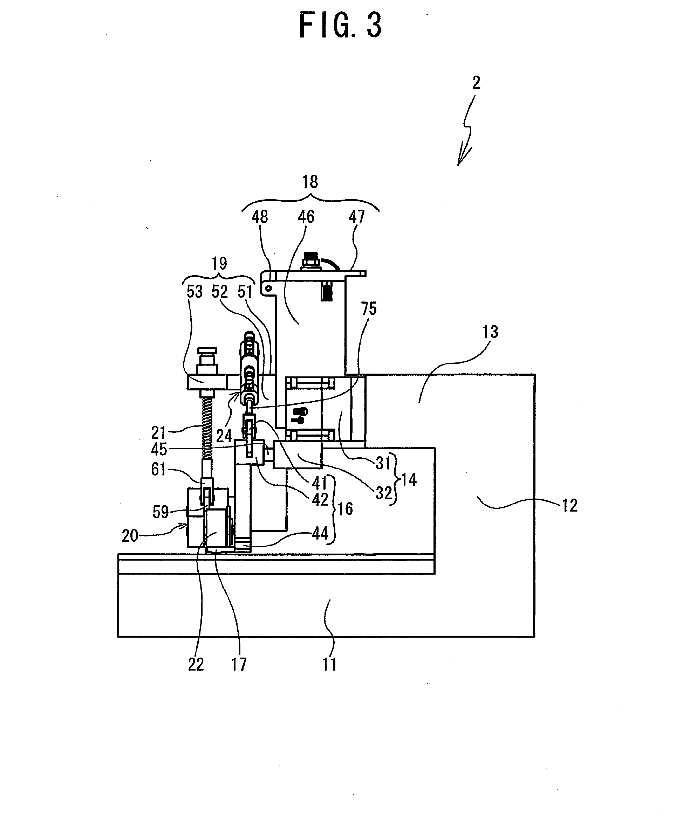

A configuration of the cloth bonding apparatus 1 will be described with reference to Figs. 1 to 4. In the following description, it is defined that the upper side, the lower side, the right side, the left side, the front face side, and the back face side of Fig. 3 are the upper side, the lower side, the right side, the left side, the front side, and the back side of a bonding machine 2, respectively.

An overall configuration of the cloth bonding apparatus 1 will be described with reference to Fig. 1. As shown in Fig. 1, the cloth bonding apparatus 1 includes a bonding machine 2 and a table 220. The bonding machine 2 is fixed to the table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The table 220 includes a top board 211, left and right leg portions 212, 213, left and right support portions 214, 215, and a foot holder 216. The bonding machine 2 is fixed on the top board 211. The top board 211 has a rectangular plate shape in a plan view, with the right-and-left direction as its longitudinal direction. The length of the top board 211 in the right-and-left direction is about triple the length of the bonding machine 2 in the right-and-left direction. The length of the top board 211 in the back-and-forth direction is about twice the length of the bonding machine 2 in the back-and-forth direction.

The top board 211 has an operation panel 210 on the right side of a position where the bonding machine 2 is fixed. The operation panel 210 includes a liquid crystal display (LCD) portion 207 and a plurality of keys 209. The LCD portion 207 displays various items of information thereon. The keys 209 are directed for inputting various items of information. A worker may set various operations of the cloth bonding apparatus 1 by operating the keys 209 while looking at the LCD portion 207.

The left leg portion 212 having a plate shape extends vertically downwards from the left end of the top board 211, perpendicular to the upper face of the top board 211. The right leg portion 213 having a plate shape extends vertically downwards from the right end of the top board 211, perpendicular to the upper face of the top board 211. The left support portion 214 is connected to the lower end of the left leg portion 212. The right support portion 215 is connected to the lower end of the right leg portion 213. The left support portion 214 and the right support portion 215 each are substantially prismatic members with the back-and-forth direction as a longitudinal direction.

The foot holder 216 having an elongated plate shape connects the left support portion 214 and the right support portion 215 substantially at the centers thereof in the back-and-forth direction. A pedal 208 is provided substantially at the center of the foot holder 216 in the right-and-left direction. The worker may use the pedal 208 to adjust a feed speed of the cloths.

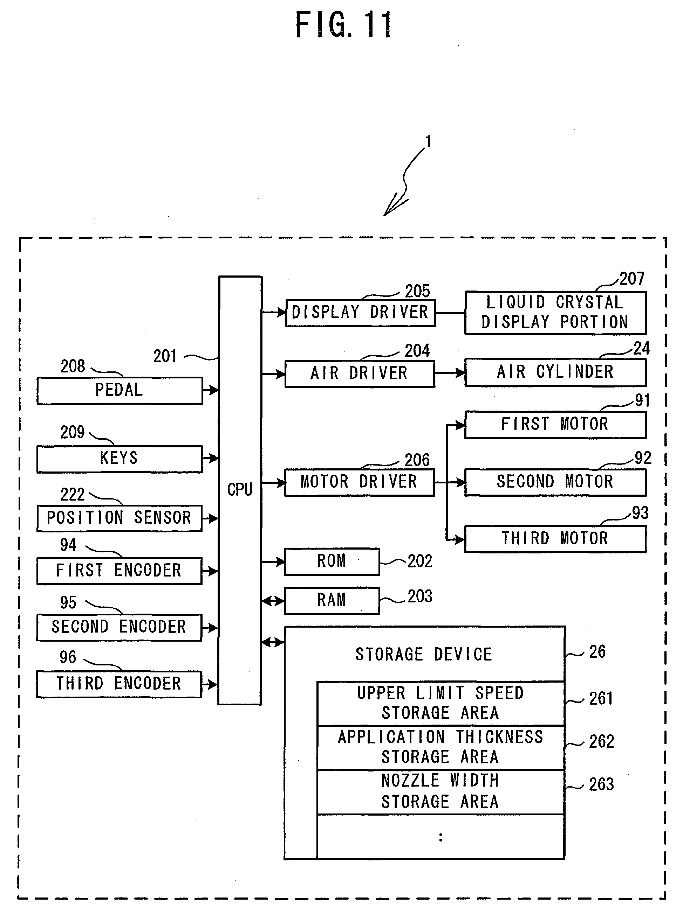

A control box 3 is fixed at the lower face of the top board 211. The control box 3 stores a control substrate having a CPU 201 (see Fig. 11) and the like mounted thereon. The control box 3 is electrically connected to the bonding machine 2, the operation panel 210, and the pedal 208.

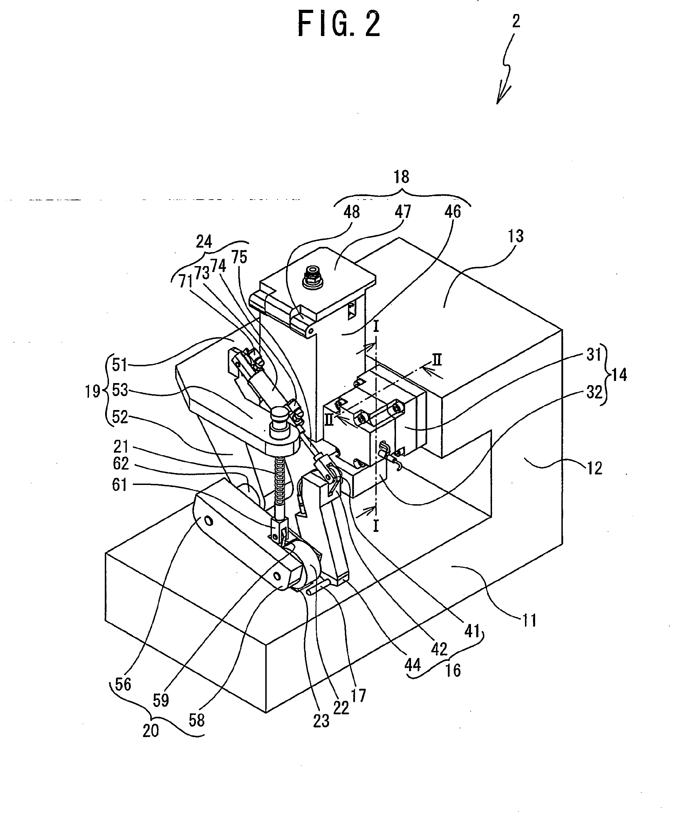

The configuration of the bonding machine 2 will be described with reference to Figs. 2 to 4. As shown in Figs. 2 and 3, the bonding machine 2 includes a bed portion 11, a pillar portion 12, and an arm portion 13. The bed portion 11 has a substantially rectangular parallelepiped shape with the right-and-left direction as the longitudinal direction. The bed portion 11 is fixed on the top board 211 (see Fig. 1). The pillar portion 12 extends vertically upwards from the right end of the bed portion 11. The arm portion 13 is connected to the upper end of the pillar portion 12 and extends leftward from the left side of the pillar portion 12. The length of the arm portion 13 in the right-and-left direction is about one third of the length of the bed portion 11 in the right-and-left direction.

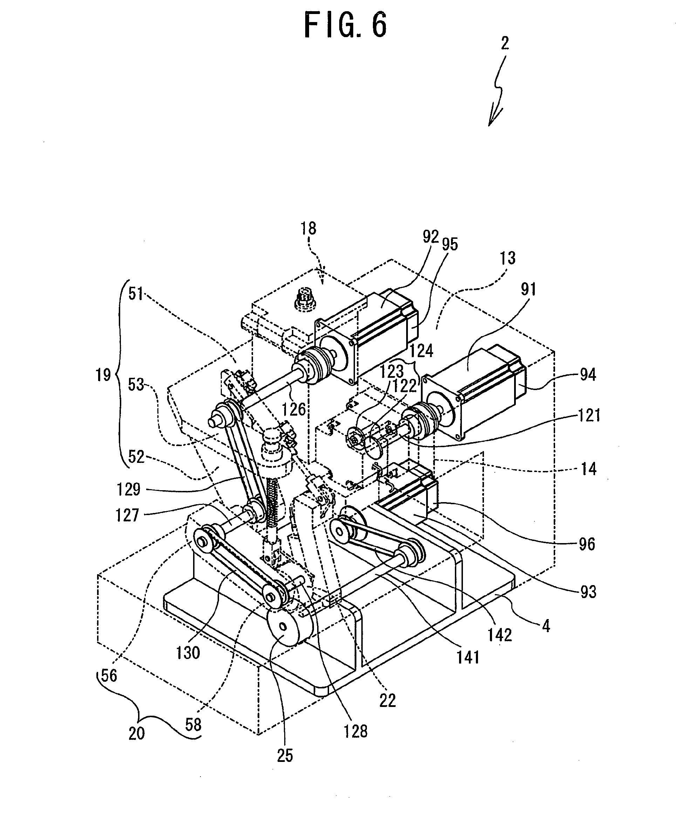

The bed portion 11 includes therein a lower feed roller 25 (see Fig. 6), a third motor 93 (see Fig. 6) and the like. The lower feed roller 25 presses and feeds cloths in conjunction with an upper feed roller 22, which will be described later. The third motor 93 drives the lower feed roller 25. The bed portion 11 functions as a base that supports the pillar portion 12. The pillar portion 12 supports the arm portion 13.

As shown in Fig. 2, the left end of the arm portion 13 supports a pump casing 14, a storage chamber 18, and a beam portion 19, from front to back in this order. The arm portion 13 includes therein a first motor 91 (see Fig. 6), a second motor 92 (see Fig. 6) and the like. The first motor 91 drives a gear pump 124 (see Fig. 6). The second motor 92 drives the upper feed roller 22.

The pump casing 14 will be described. As shown in Figs. 2 and 3, the pump casing 14 includes a first pump casing 31 and a second pump casing 32. The first pump casing 31 is a substantially cubic member. The first pump casing 31 is fixed on the left side face of the arm portion 13. The first pump casing 31 includes therein the gear pump 124 (see Fig. 6) and the like. The gear pump 124 supplies an appropriate amount of adhesive to the nozzle 17 with high accuracy. The second pump casing 32 is a substantially rectangular parallelepiped member. The second pump casing 32 extends downward from the left end portion of the lower face of the first pump casing 31. As shown in Fig. 3, the length of the first pump casing 31 in the vertical direction is substantially the same as the length of the arm portion 13 in the vertical direction. The position of the second pump casing 32 in the right-and-left direction is substantially the same as the center position of the bed portion 11 in the right-and-left direction.

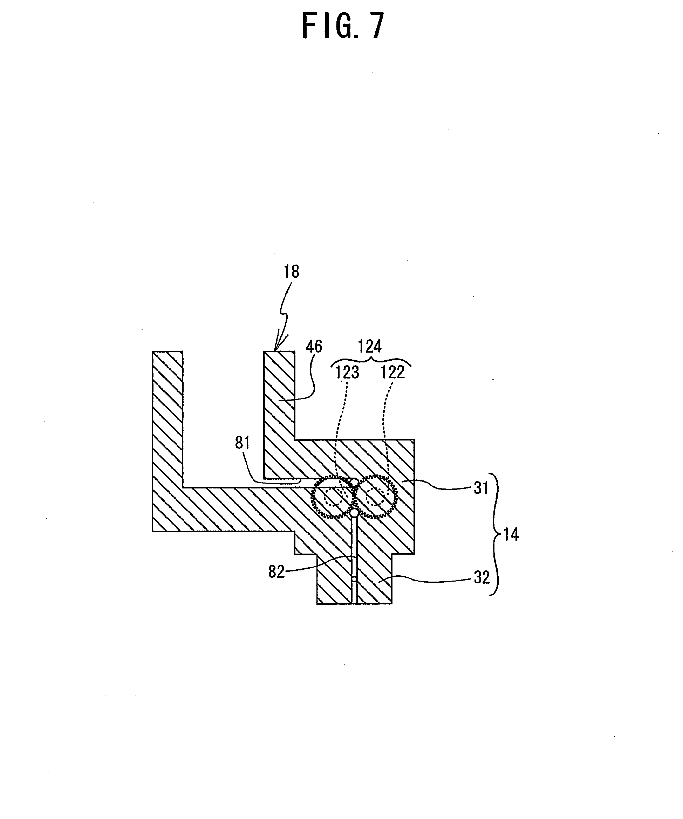

The second pump casing 32 includes a shaft portion 45 (see Fig. 3) on its left side. The shaft portion 45 is connected to the right side of the upper end portion 42 of a support portion 16 and swingably supports the support portion 16 about the shaft portion 45. The pump casing 14 includes a channel 81 (see Fig. 7) and a channel 82 (see Fig. 7), which will be described later. The channel 81 leads the adhesive from the storage chamber 18 to the gear pump 124. The channel 82 leads the adhesive from the gear pump 124 to the support portion 16.

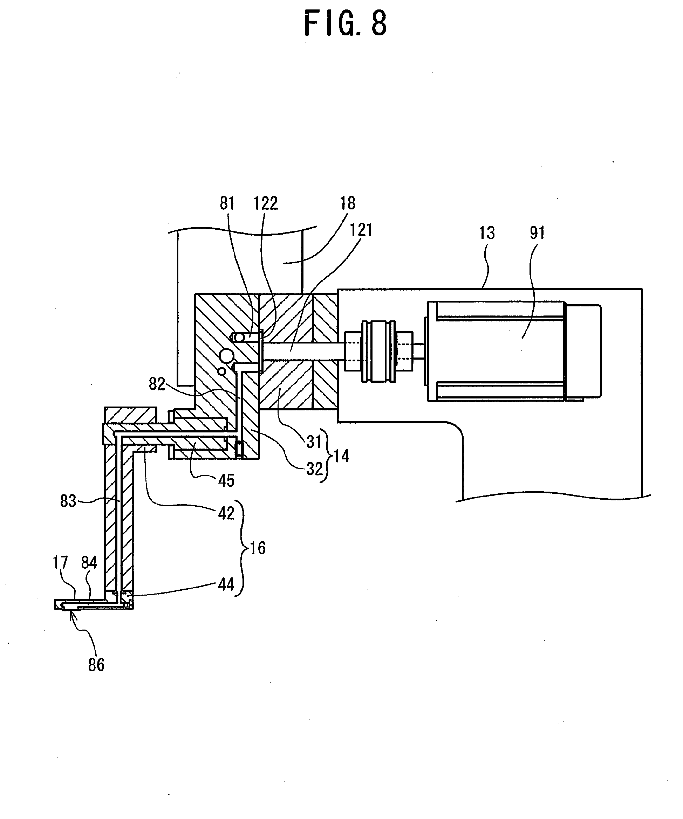

As shown in Figs. 2 and 3, the shape of the support portion 16 is substantially rectangular parallelepiped with the vertical direction as the longitudinal direction. A small gap is present between the lower end portion 44 of the support portion 16 and the bed portion 11. The support portion 16 includes therein a channel 83 (see Fig. 8). The channel 83 leads the adhesive from the pump casing 14 to the nozzle 17. The support portion 16 includes the nozzle 17 at the lower end portion 44. The nozzle 17 extends leftward from the support portion 16. The support portion 16 includes a drive transmitting portion 41 at the upper end portion 42. The drive transmitting portion 41 supports an end portion of a movable portion 75 of an air cylinder 24.

The air cylinder 24 includes air inlet ports 71 and 74. An intake/exhaust hose (not shown) is connected to each of the air inlet ports 71 and 74. The cloth bonding apparatus 1 controls an intake and an exhaust of a compressed air through the air inlet ports 71 and 74. The position of a piston inside a body portion 73 of the air cylinder 24 moves in accordance with the intake and exhaust control. The movable portion 75 is connected to the piston. Thus, the end portion of the movable portion 75 moves back and forth along with the movement of the piston. The air cylinder 24 includes a position sensor 222 (see Fig. 11) in the body portion 73. As the position sensor 222, a magnetic sensor is employed.

The magnetic sensor detects a magnetic body attached to a specified position of the piston.

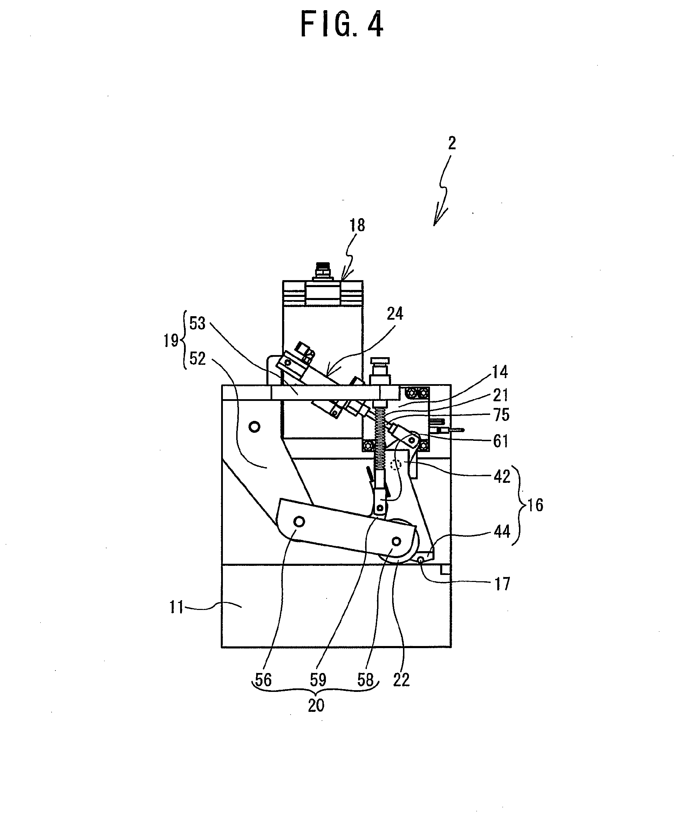

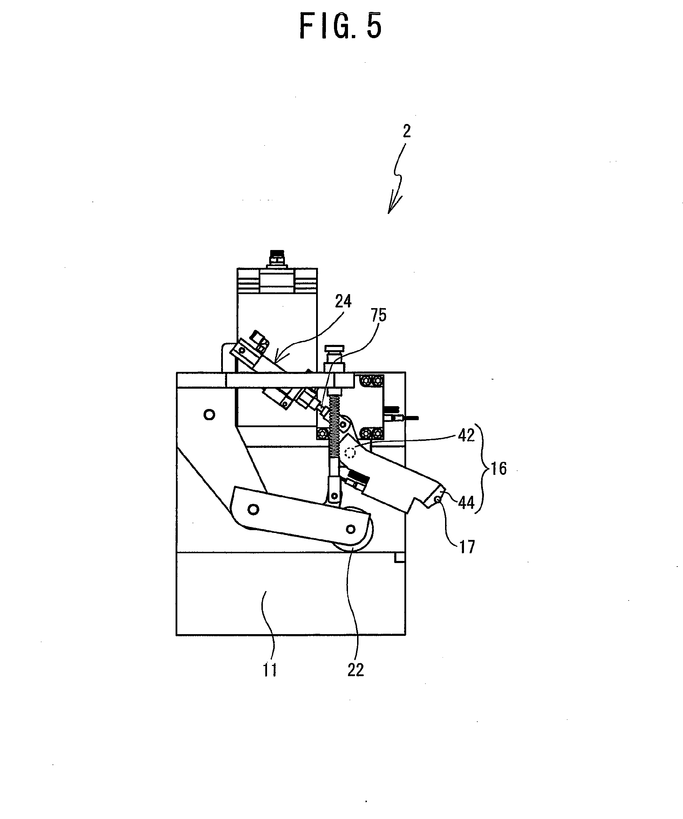

The support portion 16 swings back and forth about the shaft portion 45 along with the back-and-forth movement of the movable portion 75 of the air cylinder 24. The nozzle 17 moves along with the swing of the support portion 16 to a position where the cloth bonding work is performed (see Fig. 4) and to a position where maintenance is performed (see Fig. 5).

The nozzle 17 has a cylindrical shape. The nozzle 17 has a discharge port 86 (see Fig. 8) from which the adhesive is discharged at the bottom. When the worker performs the cloth bonding work, the discharge port 86 opposes the bed portion 11. When performing the bonding work, the worker inserts the nozzle 17 between the two layers of oppositely arranged cloths. The gear pump 124 supplies the adhesive to the nozzle 17 through the channel 83 provided inside the support portion 16. The nozzle 17 discharges the adhesive from the discharge port 86 onto the cloth. Consequently, the adhesive may be applied on the surface of the lower cloth positioned below the nozzle 17.

As shown in Figs. 2 and 3, the storage chamber 18 has a substantially rectangular parallelepiped shape with the vertical direction as the longitudinal direction. The storage chamber 18 extends upward from the left side of the arm portion 13 and from the back of the pump casing 14. The storage chamber 18 includes a body portion 46, a cover portion 47, and a cover shaft portion 48. The shape of the body portion 46 has a bottomed tube shape having an opening at the top. The cover portion 47 covers the opening at the top of the body portion 46. The body portion 46 has the cover shaft portion 48 at its upper end. The cover shaft portion 48 supports the cover portion 47 in an openable/closable manner. The storage chamber 18 stores an adhesive (not shown) inside the body portion 46. The stored adhesive may be supplied from the storage chamber 18 to the gear pump 124 (see Figs. 5 and 6) and to the nozzle 17 as needed.

As shown in Fig. 2, the beam portion 19 includes a body portion 51, a spring support portion 53, and a column portion 52. The body portion 51 is a member extending horizontally leftward from the rear left end of the arm portion 13. The length of the body portion 51 in the right-and-left direction is about one third of the length of the bed portion 11 in the right-and-left direction. The spring support portion 53 has a plate shape and extends horizontally forward from the left end portion of the body portion 51. The length of the spring support portion 53 in the back-and-forth direction is about half the length of the bed portion 11 in the back-and-forth direction. As shown in Figs. 2 and 4, the column portion 52 extends obliquely downward from the body portion 51 at about 45 degrees relative to the horizontal plane. There is a gap between the lower end of the column portion 52 and the bed portion 11.

As shown in Fig. 2, the spring support portion 53 has a hole at the front end portion. The spring support portion 53 supports a shaft portion 61 in a vertically movable manner. The shaft portion 61 is inserted through the spring 21. The upper end part of the shaft portion 61 is inserted into the hole of the spring support portion 53. The column portion 52 has a shaft portion 62 extending horizontally leftward from the lower end part thereof. The shaft portion 62 supports a rear end portion 56 of the roller holding portion 20. The roller holding portion 20 may swing a front end portion 58 in the vertical direction with the shaft portion 62 as the center of swing. The body portion 51 is provided with an air cylinder 24 at the right side of the spring support portion 53. The air cylinder 24 is directed for switching the position of the support portion 16.

The roller holding portion 20 will be described. The front end portion 58 of the roller holding portion 20 rotatably supports the upper feed roller 22 having a cylindrical shape. The upper feed roller 22 is positioned in the vicinity of the back of the nozzle 17 that extends from the support portion 16. The nozzle 17 may preferably be within a distance, from the center of rotation of the upper feed roller 22, for example, of twice larger than the diameter of the upper feed roller 22. The roller holding portion 20 includes a shaft support portion 59 on the upper face at a slightly forward position from the center. The shaft support portion 59 supports the lower end of the shaft portion 61 inserted through the spring 21. The spring 21 is interposed between the spring support portion 53 and the lower end of the shaft portion 61. The spring 21 urges the shaft portion 61 downwards, thereby urging the roller holding portion 20 connected to the shaft portion 61 downwards.

As shown in Fig. 2, the bed portion 11 is provided with a hole 23 below the upper feed roller 22. A part of the lower feed roller 25 (see Fig. 6) slightly projects upwards from the hole 23. The lower feed roller 25 rotates along with the upper feed roller 22. The lower feed roller 25 and the upper feed roller 22 feed the cloths sandwiched therebetween from front to back.

Positions of the nozzle 17 when moved will be described with reference to Fig. 4 and Fig. 5.

As shown in Fig. 4, when the movable portion 75 is moved forward, the support portion 16 stands upright. The nozzle 17 moves to in the vicinity of and in front of the upper feed roller 22. The discharge port 86 (see Fig. 8) faces downwards. The adhesive discharged from the nozzle 17 adheres onto the lower cloth passing below the nozzle 17. The upper feed roller 22 and the lower feed roller 25 (see Fig. 6) press the cloths from above and below immediately after the adhesive has been applied on the lower cloth. The upper feed roller 22 and the lower feed roller 25 (see Fig. 6) rotate and feed the cloths from front to back. The position of the support portion 16 shown in Fig. 4 will be hereinafter referred to as a use position.

As shown in Fig. 5, when the movable portion 75 moves backwards, the support portion 16 is tilted diagonally down and forward. The nozzle 17 moves to a position away from the upper feed roller 22 and the bed portion 11. The discharge port 86 (see Fig. 8) faces diagonally down and forward. The position of the support portion 16 shown in Fig. 5 will be hereinafter referred to as a maintenance position.

The inner configuration of the bonding machine 2 will be described below with reference to Fig. 6. As shown in Fig. 6, the bonding machine 2 includes therein the first motor 91, the second motor 92, the third motor 93, and the like.

The first motor 91 transmits a rotation drive force to the gear pump 124 via a rotary shaft 121 thereby driving the gear pump 124. The gear pump 124 includes a drive gear 122 and a driven gear (idler gear) 123. The drive gear 122 is fixed at the left end of the rotary shaft 121. Accordingly, the drive gear 122 rotates along with the rotary shaft 121. The driven gear 123 meshes with the drive gear 122. The first motor 91 is positioned inside the arm portion 13 and to the right side of the portion where the pump casing 14 is connected to the arm portion 13. The rotary shaft 121 extends inside the pump casing 14 leftward from the rotary shaft of the first motor 91. The drive gear 122 and the driven gear 123 supply an appropriate amount of the adhesive to the nozzle 17.

The second motor 92 transmits a rotation drive force to the upper feed roller 22 via the rotary shafts 126, 127, 128 and belts 129, 130 thereby driving the upper feed roller 22. The second motor 92 is positioned inside the arm portion 13 and to the right side of the portion where the beam portion 19 is connected with the arm portion 13. The rotary shaft 126 extends leftward from the rotary shaft of the second motor 92 and extends through the body portion 51. The left end of the rotary shaft 126 is positioned inside the column portion 52. The left end of the rotary shaft 126 supports a pulley. The right end of the rotary shaft 127 is positioned inside the lower end of the column portion 52 and the left end of the rotary shaft 127 is positioned inside the rear end portion 56 of the roller holding portion 20. The right end and left end of the rotary shaft 127 each support a pulley. The rotary shaft 128 is a rotary shaft of the upper feed roller 22. The left end of the rotary shaft 128 is positioned inside the front end portion 58 of the roller holding portion 20 and supports a pulley. The right end of the rotary shaft 128 projects from the front end portion 58 and supports the upper feed roller 22. The belt 129 is crossed between the pulley at the left end of the rotary shaft 126 and the pulley at the right end of the rotary shaft 127 inside the column portion 52. The belt 130 is crossed between the pulley at the left end of the rotary shaft 127 and the pulley at the left end of the rotary shaft 128 inside the roller holding portion 20. The upper feed roller 22 rotates along with the rotation of the second motor 92.

The third motor 93 transmits a rotation drive force to the lower feed roller 25 via a rotary shaft 141 and a belt 142 thereby driving the lower feed roller 25. The lower feed roller 25 is cylindrical and is fixed to the rotary shaft 141. The lower feed roller 25 is positioned below the upper feed roller 22 and inside the bed portion 11. The bed portion 11 has a support bed 4 therein. The support bed 4 rotatably supports the rotary shaft 141. The belt 142 is crossed between a pulley of a rotary shaft of the third motor 93 and a pulley at the right end of the rotary shaft 141 inside the bed portion 11. The lower feed roller 25 rotates along with the rotation of the third motor 93.

A first encoder 94 is connected to the right end of the first motor 91. The first encoder 94 detects a rotation amount of the first motor 91. A second encoder 95 is connected to the right end of the second motor 92. The second encoder 95 detects a rotation amount of the second motor 92. A third encoder 96 is connected to the right end of the third motor 93. The third encoder 96 detects a rotation amount of the third motor 93.

The channels for the adhesive in the bonding machine 2 will be described with reference to Figs. 7 and 8.

As shown in Fig. 7, the body portion 46 of the storage chamber 18 has a peripheral wall and a bottom wall. The body portion 46 stores an adhesive within a space enclosed by the peripheral wall and the bottom wall. The channel 81 is a through hole extending toward the pump casing 14 at the lower end of the peripheral wall of the pump casing 14 side. The channel 81 is a channel for leading the adhesive stored in the body portion 46 to the gear pump 124.

The channel 81 extends from the storage chamber 18 to the center of the first pump casing 31 of the pump casing 14. The channel 81 bends rightward at a right angle at the center of the first pump casing 31 and reaches a position above where the drive gear 122 and the driven gear 123 intermesh with each other.

As shown in Fig. 8, the channel 82 is a channel for leading the adhesive that has passed through the gear pump 124 to the channel 83 in the support portion 16. The channel 82 extends leftward from a position below where the drive gear 122 and the driven gear 123 (see Fig. 7) intermesh with each other. The channel 82 extending leftward bends downward, bends leftward at its lower end, passes through the shaft portion 45 to connect to the channel 83 inside the support portion 16.

The channel 83 is a channel for leading the adhesive that has flowed through the channel 82 to the nozzle 17. The channel 83 extends inside the support portion 16 from the upper end portion 42 to the lower end portion 44 to connect to a channel 84 inside the nozzle 17.

The channel 84 is a channel for leading the adhesive that has flowed through the channel 83 to the discharge port 86. The discharge port 86 is provided at the lower part of the left end of the nozzle 17. The channel 84 extends inside the nozzle 17 from the right end to the left end to connect to the discharge port 86. The adhesive is discharged out of the discharge port 86.

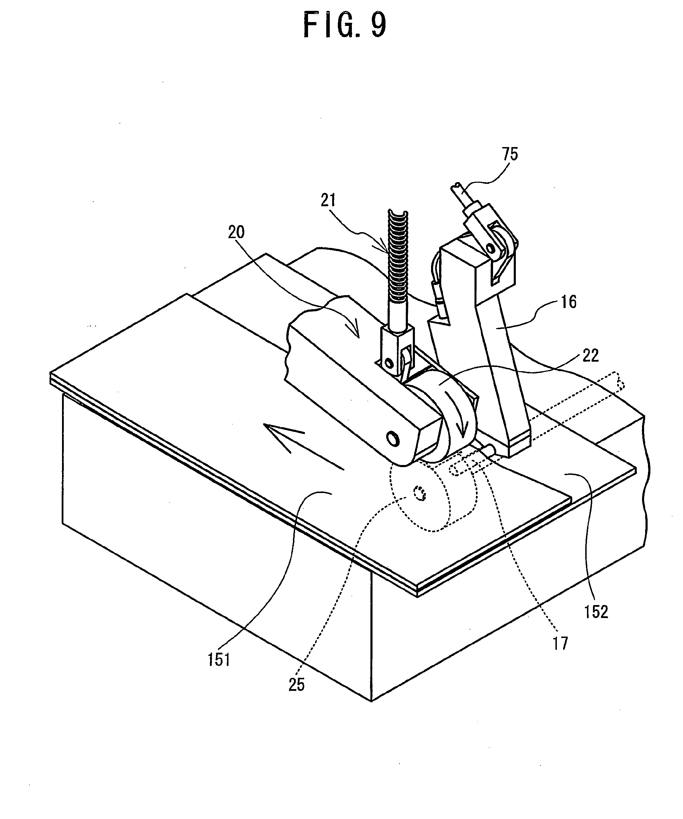

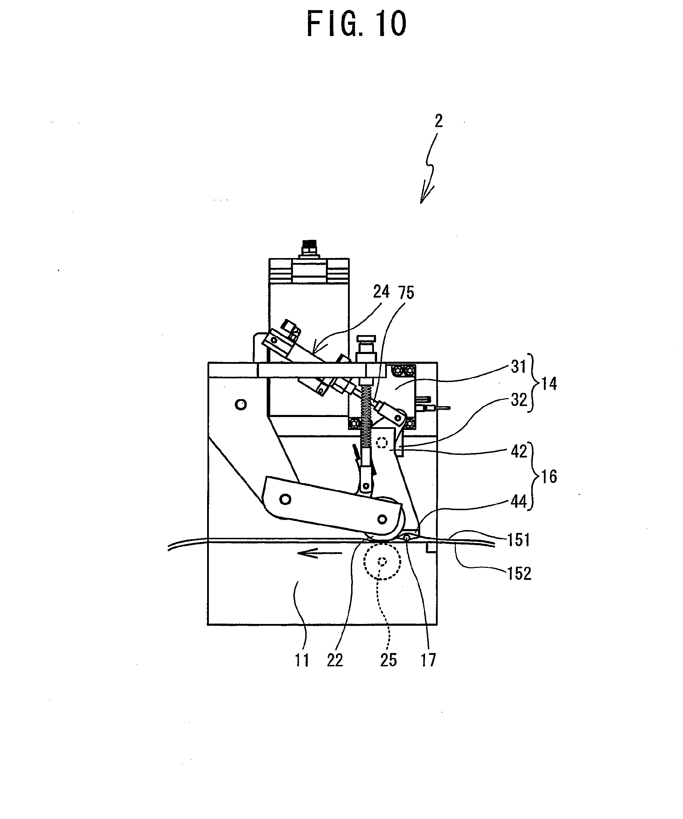

The operation of the bonding machine 2 during the bonding work will be described with reference to Fig. 9 and Fig. 10, using an example where an upper cloth 151 and a lower cloth 152 are bonded with each other.

As shown in Fig. 9 and Fig. 10, when performing the bonding work, the bonding machine 2 moves the movable portion 75 of the air cylinder 24 forward to move the support portion 16 to the use position. The worker places the upper cloth 151 and the lower cloth 152 in a stacked manner and places the nozzle 17 at a portion where the cloths are bonded. The upper feed roller 22 and the lower feed roller 25 sandwich the upper cloth 151 and the lower cloth 152 behind the nozzle 17.

In the state described above, when the worker steps on and presses down the pedal 208 (see Fig. 1), the gear pump 124 (see Fig. 7) is driven. As a result, the adhesive is supplied through the channels 81 to 83, discharged from the nozzle 17, and adheres onto the lower cloth 152. As shown in Fig. 10, the upper feed roller 22 and the lower feed roller 25 rotate in a direction to feed the upper cloth 151 and the lower cloth 152 from front to back. The spring 21 urges the upper feed roller 22 downwards. Therefore, the upper feed roller 22 and the lower feed roller 25 press and bond the upper cloth 151 and the lower cloth 152 together.

An electrical configuration of the cloth bonding apparatus 1 will be described with reference to Fig. 11.

The cloth bonding apparatus 1 includes a CPU 201, a ROM 202, a RAM 203, and a storage device 26. The CPU 201 performs reception processing and control processing. The reception processing is a processing for receiving input information from the key 209, the pedal 208, and the like. The reception processing is also a processing for receiving information detected by the various sensors. The control processing is a processing for controlling the motors and the like. The ROM 202 stores programs to be executed by the CPU 201 and various default parameters and the like. The RAM 203 temporarily stores timers, counters, flags, and the like. The storage device 26 stores various setting information inputted by the worker. The CPU 201 is electrically connected to the ROM 202, the RAM 203, and the storage device 26, respectively. The CPU 201 can access storage areas of the ROM 202, the RAM 203, and the storage device 26.

The storage device 26 includes at least an upper limit speed storage area 261, an application thickness storage area 262, and a nozzle width storage area 263. The upper limit speed storage area 261 stores an upper limit of a speed (feed speed) at which the upper feed roller 22 and the lower feed roller 25 feed the cloths (hereinafter referred to as an upper limit speed). The application thickness storage area 262 stores a thickness of the adhesive to be applied on the cloth (hereinafter referred to as an application thickness). The nozzle width storage area 263 stores a width of the discharge port 86 of the nozzle 17 in the right-and-left direction (hereinafter referred to as a nozzle width). The above-mentioned information may be inputted by the worker through the key 209 beforehand. The CPU 201 receives the information inputted by the worker and stores the received information in the storage device 26. The CPU 201 uses the information when determining the feed speed and an amount of the adhesive to be discharged (hereinafter referred to as an adhesive discharge amount).

The pedal 208 is electrically connected with the CPU 201. The worker may use the pedal 208 to adjust the feed speed of the cloths. The CPU 201 recognizes an amount by which the pedal 208 is pressed down (hereinafter referred to as an adjustment amount). The CPU 201 determines a rotation speed of the upper feed roller 22 and the lower feed roller 25, and rotation speed of the drive gear 122 and the driven gear 123, on the basis of the recognized adjustment amount of the pedal 208.

The keys 209 are electrically connected with the CPU 201. The worker may use the keys 209 to enter various operation settings. The CPU 201 recognizes the press state of the keys 209 operated by the worker. The CPU 201 stores the information inputted by the worker (the upper limit speed, the application thickness, the nozzle width, and the like) in the storage device 26, on the basis of the recognized press state of the keys 209.

The position sensor 222 is electrically connected with the CPU 201. The CPU 201 recognizes information on the position of the piston detected by the position sensor 222.

The encoders 94 to 96 each are electrically connected with the CPU 201. The CPU 201 recognizes the information on the rotation amounts respectively detected by the encoders 94 to 96. The CPU 201 recognizes actual rotation speeds of the motors 91 to 93 on the basis of the information on the rotation amounts detected by the encoders 94 to 96, respectively.

A display driver 205 is electrically connected with the CPU 201. The LCD portion 207 is electrically connected with the display driver 205. The CPU 201 displays desired information on the LCD portion 207 via the display driver 205.

An air driver 204 is electrically connected with the CPU 201. The air cylinder 24 is electrically connected with the air driver 204. The CPU 201 controls a pressure of the air to be fed into the air cylinder 24 through the air inlets 71 and 74 via the air driver 204. The support portion 16 moves to the use position or to the maintenance position on the basis of the operation of the air cylinder 24.

A motor driver 206 is electrically connected with the CPU 201. The motors 91 to 93 each are electrically connected with the motor driver 206. The CPU 201 controls the motors 91 to 93 via the motor driver 206.

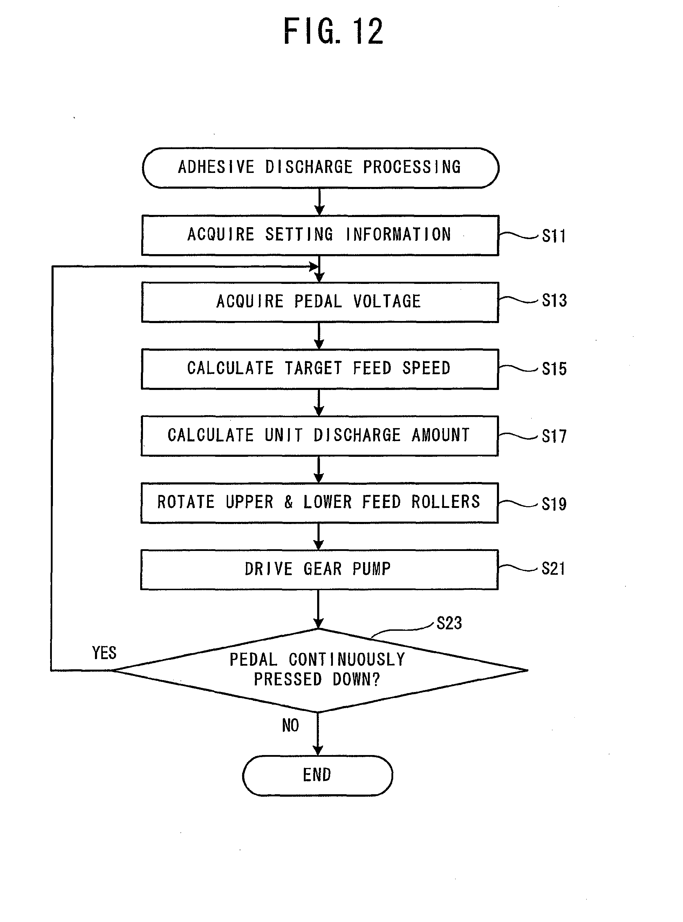

Adhesive discharge processing will be described with reference to Fig. 12. The CPU 201 performs the adhesive discharge processing when the CPU 201 detects that the pedal 208 is pressed down. In the adhesive discharge processing, the CPU 201 calculates the feed speed of the cloth based on the adjustment amount of the pedal 208 given by the worker and the upper limit speed stored in the upper limit speed storage area 261. The CPU 201 also calculates the adhesive discharge amount based on the adjustment amount of the pedal 208 given by the worker, the application thickness stored in the application thickness storage area 262, and the nozzle width stored in the nozzle width storage area 263.

As shown in Fig. 12, the CPU 201 reads and acquires the setting information, that is, the upper limit speed (mm/s), the application thickness (mm), and the nozzle width (mm) from the storage device 26 (S11). The CPU 201 acquires a voltage output from the pedal 208 (hereinafter referred to as a pedal voltage) (S13). Based on the acquired pedal voltage, the CPU 201 determines the adjustment amount of the pedal 208. For example, the adjustment amount may be calculated as a value obtained by dividing the pedal voltage by a maximum value of the voltage that can be output by the pedal 208 (hereinafter referred to as a maximum pedal voltage). An example of the expression for calculating the adjustment amount is shown by the following expression (1):

$$\text{Adjustment amount} = \text{pedal voltage (V)}/\text{maximum pedal voltage (V)} \cdots (1)$$

The CPU 201 calculates a feed speed at which the upper feed roller 22 and the lower feed roller 25 feed the cloth (hereinafter referred to as a target feed speed) (S 15). For example, the target feed speed may be calculated as a value obtained by multiplying the upper limit speed and the adjustment amount. An example of the expression for calculating the target feed speed is shown by the following expression (2):

$$\text{Target feed speed (mm/s)} = \text{upper limit speed (mm/s)} \times \text{adjustment}$$
$$\text{amount} \cdots (2)$$

The CPU 201 calculates an amount of the adhesive to be discharged from the discharge port 86 in the nozzle 17 per unit time (hereinafter referred to as a unit discharge amount) (S 17). For example, the unit discharge amount may be calculated as a value obtained by multiplying the target feed speed, the application thickness, and the nozzle width. An example of the expression for calculation is shown by the following expression (3):

$$\text{Unit discharge amount (mm}^3\text{/s)} = \text{target feed speed (mm/s)} \times \text{application}$$
$$\text{thickness (mm)} \times \text{nozzle width (mm)} \cdots (3)$$

Based on the calculated target feed speed, the CPU 201 determines the rotation speed of the upper feed roller 22 and the lower feed roller 25. The CPU 201 controls the motor driver 206 so that the second motor 92 and the third motor 93 may be rotated at the determined rotation speed. Consequently, the upper feed roller 22 and the lower feed roller 25 are rotated at the determined rotation speed (S19).

The CPU 201 determines a rotation speed of the drive gear 122 necessary for discharging the adhesive by the calculated unit discharge amount from the nozzle 17. The CPU 201 controls the motor driver 206 so that the first motor 91 may be rotated at the determined rotation speed. Consequently, the drive gear 122 is rotated at the determined rotation speed and thus the gear pump 124 is driven (S21).

The adhesive is discharged from the discharge port 86 and applied on the lower cloth. In a case where the cloths are fed at the target feed speed, the adhesive can be applied on the lower cloth in a thickness of the application thickness stored in the application thickness storage area 262 (see Fig. 11). Even in a case where the worker has changed the target feed speed, the adhesive can be applied to the lower cloth in the preset application thickness.

The CPU 201 monitors the pedal voltage output from the pedal 208. The CPU 201 determines whether the pedal 208 is continuously pressed down by the worker (S23). If the CPU 201 determines that the pedal 208 is continuously pressed down (S23: YES), the CPU 201 returns to the processing of step S 13. The CPU 201 repeats the above-described processing. If the CPU 201 determines that the worker has stopped pressing down the pedal 208 (S23: NO), the CPU 201 ends the adhesive discharge processing.

As described above, the worker may adjust the feed speed of the cloths by stepping on and pressing down the pedal 208. The CPU 201 calculates the target feed speed based on the upper limit speed and the adjustment amount. If the upper limit speed is set to a large value, the target feed speed changes greatly even with a slight change in the adjustment amount. If the upper limit speed is set to a small value, the target feed speed does not change so much even with a great change in the adjustment amount. If the worker is not capable of delicately controlling the adjustment amount of the pedal 208, the worker may set the upper limit speed to a small value. Consequently, the cloth bonding apparatus 1 can make the change in the target feed speed small, even when the change in the adjustment amount is great. Thus, even if the worker is not capable of delicately controlling the adjustment amount of the pedal 208, the worker can delicately control the feed speed.

The present invention is not limited to the above-described embodiment, but can be modified variously. Modified embodiments of the present invention will be described below.

<First Modified Embodiment>

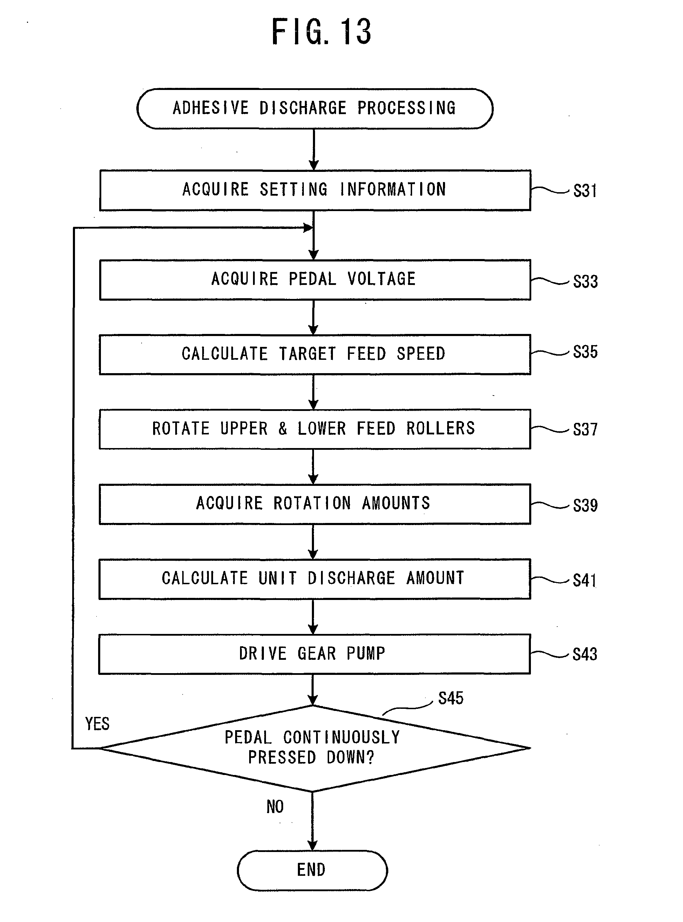

A first modified embodiment of the adhesive discharge processing will be described below with reference to Fig. 13. In the first modified embodiment, the CPU 201 calculates the unit discharge amount based on actual rotation speeds of the motors 92 and 93. The cloth bonding apparatus 1 can discharge the adhesive by an amount that corresponds to actual rotation speeds of the upper feed roller 22 and the lower feed roller 25. The CPU 201 performs the adhesive discharge processing when the CPU 201 detects that the pedal 208 is stepped on and pressed down.

As shown in Fig. 13, the CPU 201 reads and acquires the setting information, that is, the upper limit speed (mm/s), the application thickness (mm), and the nozzle width (mm) from the storage device 26 (S31). The CPU 201 acquires the pedal voltage (S33), to determine the adjustment amount of the pedal 208. The CPU 201 may calculate the adjustment amount by using Expression (1). The CPU 201 then calculates the target feed speed (S35). The CPU 201 may calculate the target feed speed by using Expression (2). Based on the calculated target feed speed, the CPU 201 determines the rotation speed of the upper feed roller 22 and the lower feed roller 25. The CPU 201 controls the motor driver 206 so that the motors 92 and 93 may be rotated at the determined rotation speed. The upper feed roller 22 and the lower feed roller 25 are rotated (S37).

The CPU 201 acquires the rotation amounts detected by the encoders 95 and 96 (S39). Based on the acquired rotation amounts, the CPU 201 calculates the rotation speeds of the respective motors 92 and 93. Based on the calculated rotation speeds, the CPU 201 determines a feed speed at which the rollers 22 and 25 are actually feeding the cloths (hereinafter referred to as an actual feed speed). Based on the determined actual feed speed, the CPU 201 calculates the unit discharge amount (S41). The unit discharge amount may be calculated as a value obtained by multiplying the actual feed speed, the application thickness, and the nozzle width. An example of the expression for calculating the unit discharge amount is shown by the following expression (4):

$$\text{Unit discharge amount } (\text{mm}^3/\text{s}) = \text{actual feed speed } (\text{mm/s}) \times \text{application}$$

$$\text{thickness } (\text{mm}) \times \text{nozzle width } (\text{mm}) \cdots (4)$$

The CPU 201 determines the rotation speed of the drive gear 122 necessary for discharging the adhesive by the calculated unit discharge amount from the nozzle 17. The CPU 201 controls the motor driver 206 so that the first motor 91 may be rotated at the determined rotation speed. Consequently, the drive gear 122 is rotated at the determined rotation speed and thus the gear pump 124 is driven (S43).

In a case where a force is applied to the cloths in such a direction as to inhibit the rotations of the upper feed roller 22 and the lower feed roller 25, the motors 92 and 93 may not be rotated at a desired rotation speed. In such a case, the cloths may not be fed at the target feed speed. In the first modified embodiment, the CPU 201 determines the feed speed at which the cloths are actually being fed (the actual feed speed) based on the rotation amounts detected by the respective encoders 95 and 96. Based on the actual feed speed, the CPU 201 calculates the unit discharge amount. Consequently, the adhesive can be applied on the lower cloth in a thickness of the application thickness stored in the application thickness storage area 262, even if the target feed speed and the actual feed speed are different from each other.

The CPU 201 monitors the pedal voltage output from the pedal 208. The CPU 201 determines whether the pedal 208 is continuously pressed down by the worker (S45). If the CPU 201 determines that the pedal 208 is continuously pressed down (S45: YES), the CPU 201 returns to the processing of step S33. The CPU 201 repeats the above-described processing. If the CPU 201 determines that the worker has stopped pressing down the pedal 208 (S45: NO), the CPU 201 ends the adhesive discharge processing.

As described above, the cloth bonding apparatus 1 calculates the unit discharge amount of the adhesive based on the actual feed speed. Therefore, the adhesive can be applied on the lower cloth uniformly in the preset application thickness, even if the target feed speed and the actual feed speed are different from each other.

<Second Modified embodiment>

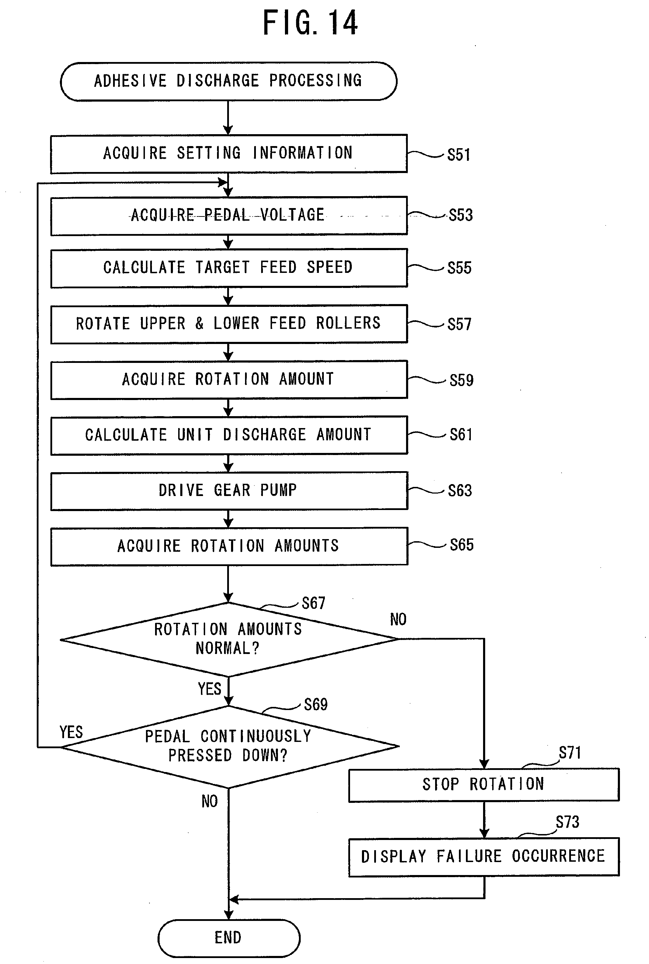

A second modified embodiment of the adhesive discharge processing will be described below with reference to Fig. 14. In the second modified embodiment, if any of values of the rotation amounts detected by the encoders 94 to 96 is not normal, the CPU 201 stops the operation of bonding the cloths. The CPU 201 performs the adhesive discharge processing when the CPU 201 detects that the pedal 208 is stepped on and pressed down.

As shown in Fig. 14, the CPU 201 reads and acquires the setting information, that is, the upper limit speed (mm/s), the application thickness (mm), and the nozzle width (mm) from the storage device 26 (S51). The CPU 201 acquires the pedal voltage (S53), to determine the adjustment amount of the pedal 208. The CPU 201 calculates the target feed speed (S55). Based on the calculated target feed speed, the CPU 201 determines the rotation speed of the upper feed roller 22 and the lower feed roller 25. The CPU 201 controls the motor driver 206 so that the second motor 92 and the third motor 93 may be rotated at the determined rotation speed. The upper feed roller 22 and the lower feed roller 25 are rotated (S57).

The CPU 201 acquires the rotation amounts detected by the encoders 95 and 96 (S59). Based on the acquired rotation amounts, the CPU 201 determines the actual feed speed. Based on the actual feed speed, the CPU 201 calculates the unit discharge amount (S61). The CPU 201 determines the rotation speed of the drive gear 122 necessary for discharging the adhesive by the unit discharge amount from the nozzle 17. The CPU 201 controls the motor driver 206 so that the first motor 91 may be rotated at the determined rotation speed. Consequently, the drive gear 122 is rotated and thus the gear pump 124 is driven (S63).

The CPU 201 acquires the rotation amount of the first motor 91 detected by the first encoder 94, to calculate the rotation speed (S65). The CPU 201 determines whether the rotation speeds of the motors 91 to 93 respectively calculated in the processing at steps S59 and S65 are normal (S67). The CPU 201 compares rotation speeds corresponding to instructions directed to the motor driver 206 (hereinafter referred to as target rotation speeds) and rotation speeds based on the actual rotation amounts detected by the encoders 94 to 96 (hereinafter referred to as actual rotation speeds) to each other. If the corresponding target rotation speeds and the actual rotation speeds are substantially the same, the CPU 201 determines that the rotation amounts detected by the encoders 94 to 96 are normal. If any one of the target rotation speeds is greatly different from the corresponding actual rotation speed, the CPU 201 determines that the rotation amount detected by the corresponding one of encoders 94 to 96 is not normal.

One example where the target rotation speed and the actual rotation speed are greatly different from each other is such a case that a force which inhibits the cloths from being fed is applied to the cloths to restrict the rotations of the upper feed roller 22 and the lower feed roller 25. Another example where the target rotation speed and the actual rotation speed are greatly different from each other is such a case that the channels 82 to 84 (see Fig. 7) are clogged with the adhesive to restrict the rotation of the drive gear 122 (see Fig. 5).

If the CPU 201 determines that any one of the rotation amounts is not normal (S67: NO), the CPU 201 stops rotations of the motors 91 to 93 (S71) to stop the bonding operation. The CPU 201 controls a display driver 205 so that a notification of an occurrence of a failure is displayed on the LCD 207. Accordingly, the worker can recognize the occurrence of the failure. The CPU 201 then ends the adhesive discharge processing.

If the CPU 201 determines that all the rotation amounts detected by the encoders 94 to 96 are normal (S67: YES), the CPU 201 monitors the pedal voltage output from the pedal 208. The CPU 201 determines whether the pedal 208 is continuously pressed down by the worker (S69). If the CPU 201 determines that the pedal 208 is continuously pressed down (S69: YES), the CPU 201 returns to the processing at step S53. The CPU 201 repeats the above-described processing. If the CPU 201 determines that the worker has stopped pressing down the pedal 208 (S69: NO), the CPU 201 ends the adhesive discharge processing.

As described above, if any of the rotation amounts detected by the encoders 94 to 96 is not normal, the cloth bonding apparatus 1 ends the operation of bonding the cloths. The cloth bonding apparatus 1 then notifies the worker of an occurrence of the failure. If a failure occurs in feeding of the cloth or the channel is clogged with the adhesive, the cloth bonding apparatus 1 can immediately end the bonding operation. The cloth bonding apparatus 1 can also notify the worker of the failure.

The upper feed roller 22 and the lower feed roller 25 in Fig. 6 correspond to the feeding portion of the present invention. The upper limit speed storage area 261 in the storage device 26 corresponds to the speed storage device of the present invention. The pedal 208 shown in Fig. 1 corresponds to the input portion of the present invention. The CPU 201 that performs the processing of step S15 in Fig. 11 corresponds to the speed calculation portion, the CPU 201 that performs the processing of step S 19 corresponds to the feed control portion, the CPU 201 that performs the processing of step S 17 corresponds to the discharge amount determination portion, and the CPU 201 that performs the processing of step S21 corresponds to the discharge control portion of the present invention.

The second encoder 95 and the third encoder 96 in Fig. 4 correspond to the detection portion of the present invention. The CPU 201 that performs the processing of step S 11 in Fig. 11 corresponds to the parameter acquisition portion of the present invention.

The present invention is not limited to the above-described embodiment and modified embodiments and can be further modified variously within the scope of the appended claims. For example, in the above-described embodiment, the adjustment amount is determined according to Expression (1). The present invention is not limited to this calculation method. For example, the cloth bonding apparatus 1 may store a table that correlates the pedal voltage with the adjustment amount with each other in the storage device 26 beforehand. The cloth bonding apparatus 1 may select an adjustment amount corresponding to an acquired pedal voltage in the table to determine the adjustment amount.

In the above-described embodiment, the target feed speed is determined according to Expression (2). The present invention is not limited to this determination method. For example, the cloth bonding apparatus 1 may set the target feed speed to 0mm/s, in a case where the adjustment amount is less than a specified value. The cloth bonding apparatus 1 may determine the upper limit speed as the target feed speed, in a case where the adjustment amount is equal to or more than a specified value.

In the above-described embodiments, the unit discharge amount is determined according to Expressions (3) and (4). The present invention is not limited to this determination method. The adhesive has a possibility of penetrating through the fabrics. Therefore, the cloth bonding apparatus 1 may multiply the value obtained with Expressions (3) or (4) by a constant (equal to or more than 1.0) and determine a result of the calculation as the unit discharge amount, so that an extra adhesive may be discharged.

Examples in which the cloth bonding apparatus bonds separate pieces of cloths together are given in the above-described embodiment and the modified embodiment. However, the cloth bonding apparatus may bond folded portions of one folded cloth. In other words, the cloth bonding apparatus may bond two layers of cloth(s).

**Claims**

1. A cloth bonding apparatus (1), comprising:

    a nozzle (17) from which an adhesive is dischargeable onto a first layer of cloth;
    a feeding portion (22, 25) adapted to press and feed the first layer of cloth with a second layer of cloth in a cloth feed direction, the cloth feed direction intersecting with a direction in which the adhesive is discharged from the nozzle (17);
    a speed storage device (261) that stores an upper limit of a feed speed, the feed speed being a speed at which the feeding portion (22, 25) feeds the first and second layers of cloth;
    an input portion (208) from which an adjustment amount for adjusting the feed speed can be inputted;
    a speed calculation portion (201) that calculates as a target feed speed a target value for the feed speed based on the adjustment amount inputted from the input portion (208) and the upper limit of the feed speed stored in the speed storage device (261);
    a feed control portion (201) that controls the feeding portion (22, 25) so that the feeding portion (22, 25) feeds the first and second layers of cloth at the target feed speed calculated by the speed calculation portion (201);
    a discharge amount determination portion (201) that determines a discharge amount based on the target feed speed calculated by the speed calculation portion (201), the discharge amount being an amount of the adhesive to be discharged from the nozzle (17); and
    a discharge control portion (201) that controls so that the adhesive is discharged from the nozzle (17) by the discharge amount determined by the discharge amount determination portion (201).

2. The cloth bonding apparatus (1) of claim 1, further comprising a detection portion (95, 96) that detects an actual feed speed, the actual feed speed being a speed at which the feeding portion (22, 25) is actually feeding the first and second layers of cloth based on the target feed speed,
    wherein the discharge amount determination portion (201) determines the discharge amount based on the actual feed speed detected by the detection portion (95, 96).

3. The cloth bonding apparatus (1) of claim 1, further comprising a parameter acquisition portion (201) that acquires a target thickness and a nozzle width, the target thickness being a target value of a thickness of the adhesive to be applied on the first layer of cloth, and the nozzle width being a width of a discharge port (86) in a direction that intersects with the cloth feed direction, the discharge port (86) being provided in the nozzle (17) and being a portion through which the adhesive is dischargeable,
    wherein the discharge amount determination portion (201) determines a unit discharge amount based on the target thickness and the nozzle width acquired by the parameter acquisition portion (201) and the target feed speed calculated by the speed calculation portion (201), the unit discharge amount being an amount of the adhesive to be discharged from the nozzle (17) per unit time.

4. The cloth bonding apparatus (1) of claim 2, further comprising a parameter acquisition portion (201) that acquires a target thickness and a nozzle width, the target thickness being a target value of a thickness of the adhesive to be applied on the first layer of cloth, and the nozzle width being a width of a discharge port (86) in a direction that intersects with the cloth feed direction, the discharge port being provided in the nozzle (17) and being a portion through which the adhesive is dischargeable,
wherein the discharge amount determination portion (201) determines a unit discharge amount based on the target thickness and the nozzle width acquired by the parameter acquisition portion (201) and the actual feed speed detected by the detection portion (95, 96), the unit discharge amount being an amount of the adhesive to be discharged from the nozzle (17) per unit time.

5. The cloth bonding apparatus (1) of claim 2 or 4, wherein the detection portion (95, 96) includes an encoder (95, 96).

6. The cloth bonding apparatus (1) of any one of claims 1 through 5, wherein:

   the input portion (208) includes a pedal (208); and
   the speed calculation portion (201) calculates the target feed speed based on an amount by which the pedal (208) is pressed down and the upper limit of the feed speed stored in the speed storage device (261).

7. A computer-readable medium (202) storing a control program for a cloth bonding apparatus (1) including a nozzle (17) from which an adhesive is dischargeable onto a first layer of cloth and a feeding portion (22, 25) adapted to press and feed the first layer of cloth with a second layer of cloth in a cloth feed direction intersecting with a direction in which the adhesive is discharged from the nozzle (17), the program comprising instructions stored therein, that, when executed by a computer (201) of the cloth bonding apparatus (1), perform a method comprising:

   a speed calculation step of calculating as a target feed speed a target value of a feed speed based on an adjustment amount for adjusting the feed speed inputted from an input portion (208) and an upper limit of the feed speed stored in a speed storage device (261), the feed speed being a speed at which the feeding portion (22, 25) feeds the first and second layers of cloth;
   a feed control step of controlling the feeding portion (22, 25) so that the feeding portion (22, 25) feeds the first and second layers of cloth at the calculated target feed speed;
   a discharge amount determination step of determining a discharge amount based on the calculated target feed speed, the discharge amount being an amount of the adhesive to be discharged from the nozzle (17); and
   a discharge control step of controlling so that the adhesive is discharged from the nozzle (17) by the determined discharge amount.

8. The computer-readable medium (202) of claim 7, wherein:

   the method further includes a detection step of detecting an actual feed speed, the actual feed speed being a speed at which the feeding portion (22, 25) is actually feeding the first and second layers of cloth based on the target feed speed; and
   the discharge amount determination step determines the discharge amount based on the detected actual feed speed.

9. The computer-readable medium (202) of claim 7, wherein:

   the method further includes a parameter acquisition step of acquiring a target thickness and a nozzle width, the target thickness being a target value of a thickness of the adhesive to be applied on the first layer of cloth, and the nozzle width being a width of a discharge port (86) in a direction that intersects with the cloth feed direction, the discharge port (86) being provided in the nozzle (17) and being a portion through which the adhesive is dischargeable; and
   the discharge amount determination step determines a unit discharge amount based on the target thickness and the nozzle width acquired at the parameter acquisition step and the target feed speed calculated at the speed calculation step, the unit discharge amount being an amount of the adhesive to be discharged from the nozzle (17) per unit time.

10. The computer-readable medium (202) of claim 8, wherein:

    the method further includes a parameter acquisition step of acquiring a target thickness and a nozzle width, the target thickness being a target value of a thickness of the adhesive to be applied on the first layer of cloth, and the nozzle width being a width of a discharge port (86) in a direction that intersects with the cloth feed direction, the discharge port (86) being provided in the nozzle (17) and being a portion through which the adhesive is dischargeable; and

the discharge amount determination step determines a unit discharge amount based on the target thickness and the nozzle acquired at the parameter acquisition step and the actual feed speed detected at the detection step, the unit discharge amount being an amount of the adhesive to be discharged from the nozzle (17) per unit time.

11. The computer-readable medium (202) of any one of claims 7 through 10, wherein the speed calculation step calculates the target feed speed based on an amount by which a pedal (208) included in the input portion is pressed down and the upper limit of the feed speed stored in the speed storage device (261).

**Patentansprüche**

1. Tuchfügegerät (1) mit:

einer Düse (17), aus der ein Klebemittel auf eine erste Tuchlage ausgelassen werden kann;
einem Vorschubabschnitt (22, 25), der daran angepasst ist, die erste Tuchlage an eine zweite Tuchlage zu drücken und in einer Tuchvorschubrichtung vorzuschieben, wobei die Tuchvorschubrichtung eine Richtung schneidet, in der das Klebemittel aus der Düse (17) ausgelassen wird;
einer Geschwindigkeitsspeichervorrichtung (261), die eine obere Grenze einer Vorschubgeschwindigkeit speichert, wobei die Vorschubgeschwindigkeit eine Geschwindigkeit ist, mit der der Vorschubabschnitt (22, 25) die erste und die zweite Tuchlage vorschiebt;
einem Eingabeabschnitt (208), von dem ein Einstellbetrag zum Einstellen der Vorschubgeschwindigkeit eingegeben werden kann;
einem Geschwindigkeitsberechnungsabschnitt (201), der als eine Sollvorschubgeschwindigkeit einen Sollwert für die Vorschubgeschwindigkeit auf der Grundlage des Einstellbetrags, der von dem Eingabeabschnitt (208) eingegeben wird, und der oberen Grenze der Vorschubgeschwindigkeit berechnet, die in der Geschwindigkeitsspeichervorrichtung (261) gespeichert ist;
einem Vorschubsteuerabschnitt (201), der den Vorschubabschnitt (22, 25) so steuert, dass der Vorschubabschnitt (22, 25) die erste und die zweite Tuchlage mit der Sollvorschubgeschwindigkeit vorschiebt, die durch den Geschwindigkeitsberechnungsabschnitt (201) berechnet ist;
einem Auslassmengenbestimmungsabschnitt (201), der eine Auslassmenge auf der Grundlage der Sollvorschubgeschwindigkeit bestimmt, die durch den Geschwindigkeitsberechnungsabschnitt (201) berechnet ist, wobei die Auslassmenge eine Menge des Klebemittels ist, die aus der Düse (17) auszulassen ist; und
einem Auslasssteuerabschnitt (201), der eine derartige Steuerung durchführt, dass das Klebemittel aus der Düse (17) mit der Auslassmenge ausgelassen wird, die durch den Auslassmengenbestimmungsabschnitt (201) bestimmt ist.

2. Tuchfügegerät (1) gemäß Anspruch 1, des Weiteren mit einem Erfassungsabschnitt (95, 96), der eine Ist-Vorschubgeschwindigkeit erfasst, wobei die Ist-Vorschubgeschwindigkeit eine Geschwindigkeit ist, mit der der Vorschubabschnitt (22, 25) die erste und die zweite Tuchlage tatsächlich vorschiebt, und zwar auf der Grundlage der Soll-Vorschubgeschwindigkeit,
wobei der Auslassmengenbestimmungsabschnitt (201) die Auslassmenge auf der Grundlage der Ist-Vorschubgeschwindigkeit bestimmt, die durch den Erfassungsabschnitt (95, 96) erfasst ist.

3. Tuchfügegerät (1) gemäß Anspruch 1, des Weiteren mit einem Parameterakquisitionsabschnitt (201), der eine Soll-Dicke und eine Düsenbreite akquiriert, wobei die Soll-Dicke ein Sollwert einer Dicke des Klebemittels ist, das an der ersten Tuchlage aufzubringen ist, und wobei die Düsenbreite eine Breite einer Düsenöffnung (86) in einer Richtung ist, die die Tuchvorschubrichtung schneidet, wobei die Auslassöffnung (86) in der Düse (17) vorgesehen und ein Abschnitt ist, durch den das Klebemittel ausgelassen werden kann,
wobei der Auslassmengenbestimmungsabschnitt (201) eine Auslassmengeneinheit auf der Grundlage der Soll-Dicke und der Düsenbreite, die durch den Parameterakquisitionsabschnitt (201) akquiriert sind, und der Soll-Vorschubgeschwindigkeit bestimmt, die durch den Geschwindigkeitsberechnungsabschnitt (201) berechnet ist, wobei die Auslassmengeneinheit eine Menge des Klebmittels ist, die pro Zeiteinheit aus der Düse (17) auszulassen ist.

4. Tuchfügegerät (1) gemäß Anspruch 2, des Weiteren mit einem Parameterakquisitionsabschnitt (201), der eine Soll-Dicke und eine Düsenbreite akquiriert, wobei die Soll-Dicke ein Sollwert einer Dicke des Klebemittels ist, das auf die erste Tuchlage aufzubringen ist, und wobei die Düsenbreite eine Breite einer Auslassöffnung (86) in einer Richtung ist, die die Tuchvorschubrichtung schneidet, wobei die Auslassöffnung in der Düse (17) vorgesehen und ein Abschnitt ist, durch den das Klebemittel ausgelassen werden kann,

wobei der Auslassmengenbestimmungsabschnitt (201) eine Auslassmengeneinheit auf der Grundlage der Soll-Dicke und der Düsenbreite, die durch den Parameterakquisitionsabschnitt (201) akquiriert sind, und der Ist-Vorschubgeschwindigkeit bestimmt, die durch den Erfassungsabschnitt (95, 96) erfasst ist, wobei die Auslassmengeneinheit eine Menge des Klebemittels ist, die pro Zeiteinheit aus der Düse (17) auszulassen ist.

5. Tuchfügegerät (1) gemäß Anspruch 2 oder 4, wobei der Erfassungsabschnitt (95, 96) einen Encoder (95, 96) aufweist.

6. Tuchfügegerät (1) gemäß einem der Ansprüche 1 bis 5, wobei:

der Eingabeabschnitt (208) ein Pedal (208) aufweist; und
der Geschwindigkeitsberechnungsabschnitt (201) die Soll-Vorschubgeschwindigkeit auf der Grundlage eines Betrags, mit dem das Pedal (208) niedergedrückt wird, und der oberen Grenze der Vorschubgeschwindigkeit berechnet, die in der Geschwindigkeitsspeichervorrichtung (261) gespeichert ist.

7. Computerlesbares Medium (202), das ein Steuerprogramm für ein Tuchfügegerät (1) speichert, das eine Düse (17), aus der ein Klebemittel auf eine erste Tuchlage ausgelassen werden kann, und einen Vorschubabschnitt (22, 25) aufweist, der daran angepasst ist, die erste Tuchlage an eine zweite Tuchlage zu drücken und in einer Tuchvorschubrichtung vorzuschieben, die eine Richtung schneidet, in der das Klebemittel aus der Düse (17) ausgelassen wird, wobei das Programm darin gespeicherte Befehle aufweist, die, wenn sie durch einen Computer (201) des Tuchfügegeräts (1) ausgeführt werden, ein Verfahren mit den folgenden Schritten durchführen;
einen Geschwindigkeitsberechnungsschritt, um als eine Soll-Vorschubgeschwindigkeit einen Sollwert einer Vorschubgeschwindigkeit auf der Grundlage eines Einstellbetrags zum Einstellen der Vorschubgeschwindigkeit, die von dem Eingabeabschnitt (208) eingegeben wird, und einer oberen Grenze der Vorschubgeschwindigkeit zu berechnen, die in einer Geschwindigkeitsspeichervorrichtung (261) gespeichert wird, wobei die Vorschubgeschwindigkeit eine Geschwindigkeit ist, mit der der Vorschubabschnitt (22, 25) die erste und die zweite Tuchlage vorschiebt;
einen Vorschubsteuerschritt zum Steuern des Vorschubabschnitts (22, 25) derart, dass der Vorschubabschnitt (22, 25) die erste und die zweite Tuchlage mit der berechneten Soll-Vorschubgeschwindigkeit vorschiebt;
einen Auslassmengenbestimmungsschritt zum Bestimmen einer Auslassmenge auf der Grundlage der berechneten Soll-Vorschubgeschwindigkeit, wobei die Auslassmenge eine Menge des Klebemittels ist, die aus der Düse (17) auszulassen ist; und
einen Auslasssteuerschritt für eine Steuerung dergestalt, dass das Klebemittel mit der bestimmten Auslassmenge aus der Düse (17) ausgelassen wird.

8. Computerlesbares Medium (202) gemäß Anspruch 7, wobei:

das Verfahren des Weiteren einen Erfassungsschritt zum Erfassen einer Ist-Vorschubgeschwindigkeit aufweist, wobei die Ist-Vorschubgeschwindigkeit eine Geschwindigkeit ist, mit der der Vorschubabschnitt (22, 25) die erste und die zweite Tuchlage tatsächlich vorschiebt, und zwar auf der Grundlage der Soll-Vorschubgeschwindigkeit; und
wobei der Auslassmengenbestimmungsschritt die Auslassmenge auf der Grundlage der erfassten Ist-Vorschubgeschwindigkeit bestimmt.

9. Computerlesbares Medium (202) gemäß Anspruch 7, wobei:

das Verfahren des Weiteren einen Parameterakquisitionsschritt zum Akquirieren einer Soll-Dicke und einer Düsenbreite aufweist, wobei die Soll-Dicke ein Sollwert einer Dicke des Klebemittels ist, das auf die erste Tuchlage aufzubringen ist, und wobei die Sollbreite eine Breite einer Auslassöffnung (86) in einer Richtung ist, die die Tuchvorschubrichtung schneidet, wobei die Auslassöffnung (86) in der Düse (17) vorgesehen und ein Abschnitt ist, durch den das Klebemittel ausgelassen werden kann; und
wobei der Auslassmengenbestimmungsschritt eine Auslassmengeneinheit auf der Grundlage der Soll-Dicke und der Düsenbreite, die bei dem Parameterakquisitionsschritt akquiriert werden, und der Soll-Vorschubgeschwindigkeit bestimmt, die bei dem Geschwindigkeitsberechnungsschritt berechnet wird, wobei die Auslassmengeneinheit eine Menge des Klebemittels ist, die pro Zeiteinheit aus der Düse (17) auszulassen ist.

10. Computerlesbares Medium (202) gemäß Anspruch 8, wobei:

das Verfahren des Weiteren einen Parameterakquisitionsschritt zum Akquirieren einer Soll-Dicke und einer Düsenbreite aufweist, wobei die Soll-Dicke ein Sollwert einer Dicke des Klebemittels ist, das auf die erste Tuchlage aufzubringen ist, und wobei die Düsenbreite eine Breite einer Auslassöffnung (86) in einer Richtung ist, die die Tuchvorschubrichtung schneidet, wobei die Auslassöffnung (86) in der Düse (17) vorgesehen und ein Abschnitt ist, durch den das Klebemittel ausgelassen werden kann; und

wobei der Auslassmengenbestimmungsschritt eine Auslassmengeneinheit auf der Grundlage der Soll-Dicke und der Düse, die bei dem Parameterakquisitionsschritt akquiriert werden, und der Ist-Vorschubgeschwindigkeit bestimmt, die bei dem Erfassungsschritt erfasst wird, wobei die Auslassmengeneinheit eine Menge des Klebemittels ist, die pro Zeiteinheit aus der Düse (17) auszulassen ist.

**11.** Computerlesbares Medium (202) gemäß einem der Ansprüche 7 bis 10, wobei der Geschwindigkeitsberechnungsschritt die Soll-Vorschubgeschwindigkeit auf der Grundlage eines Betrags, mit dem ein Pedal (208), das bei dem Eingabeabschnitt enthalten ist, niedergedrückt wird, und der oberen Grenze der Vorschubgeschwindigkeit berechnet, die in der Geschwindigkeitsspeichervorrichtung (261) gespeichert ist.

**Revendications**

**1.** Dispositif de soudage de tissu (1), comprenant :

un injecteur (17) à partir duquel un adhésif peut être distribué sur une première couche de tissu ;
une partie d'introduction (22, 25) adaptée afin de presser et de délivrer la première couche de tissu avec une seconde couche de tissu suivant une direction d'introduction de tissu, la direction d'introduction de tissu coupant une direction suivant laquelle l'adhésif est distribué à partir de l'injecteur (17) ;
un dispositif de mémorisation de vitesse (261) qui mémorise une limite supérieure d'une vitesse d'introduction, la vitesse d'introduction étant une vitesse à laquelle la partie d'introduction (22, 25) délivre les première et seconde couches du tissu ;
une partie d'entrée (208) à partir de laquelle une valeur de réglage destinée à régler la vitesse d'introduction peut être entrée ;
une partie de calcul de vitesse (201) qui calcule, en tant que vitesse d'introduction de consigne, une valeur de consigne pour la vitesse d'introduction sur la base de la valeur de réglage entrée à partir de la partie d'entrée (208) et de la limite supérieure de la vitesse d'introduction mémorisée dans le dispositif de mémorisation de vitesse (261) ;
une partie de commande d'alimentation (201) qui commande la partie d'introduction (22, 25) de telle sorte que la partie d'introduction (22, 25) délivre les première et seconde couches de tissu à la vitesse d'introduction de consigne calculée par la partie de calcul de vitesse (201) ;
une partie de détermination de quantité à distribuer (201) qui détermine une quantité à distribuer sur la base de la vitesse d'introduction de consigne calculée par la partie de calcul de vitesse (201), la quantité à distribuer étant une quantité de l'adhésif à distribuer à partir de l'injecteur (17) ; et
une partie de commande de distribution (201) qui commande la distribution de la quantité à distribuer, déterminée par la partie de détermination de quantité à distribuer (201), de l'adhésif par l'injecteur (17).

**2.** Dispositif de soudage de tissu (1) selon la revendication 1, comprenant en outre une partie de détection (95, 96) qui détecte une vitesse d'introduction réelle, la vitesse d'introduction réelle étant une vitesse à laquelle la partie d'introduction (22, 25) délivre réellement les première et seconde couches de tissu sur la base de la vitesse d'introduction de consigne,
dans lequel la partie de détermination de quantité à distribuer (201) détermine la quantité à distribuer sur la base de la vitesse d'introduction réelle détectée par la partie de détection (95, 96).

**3.** Dispositif de soudage de tissu (1) selon la revendication 1, comprenant en outre une partie d'acquisition de paramètres (201) qui fait l'acquisition d'une épaisseur de consigne et d'une largeur d'injecteur, l'épaisseur de consigne étant une valeur de consigne d'une épaisseur de l'adhésif à appliquer sur la première couche de tissu, et la largeur d'injecteur étant une largeur d'un orifice de distribution (86) suivant une direction qui coupe la direction d'introduction de tissu, l'orifice de distribution (86) étant formé sur l'injecteur (17) et étant une partie à travers laquelle l'adhésif peut être distribué,
dans lequel la partie de détermination de quantité à distribuer (201) détermine une quantité unitaire à distribuer sur la base de l'épaisseur de consigne et de la largeur d'injecteur acquises par la partie d'acquisition de paramètres (201) et de la vitesse d'introduction de consigne calculée par la partie de calcul de vitesse (201), la quantité unitaire à distribuer étant une quantité de l'adhésif à distribuer par unité de temps par l'injecteur (17).

**4.** Dispositif de soudage de tissu (1) selon la revendication 2, comprenant en outre une partie d'acquisition de paramètres (201) qui fait l'acquisition d'une épaisseur de consigne et d'une largeur d'injecteur, l'épaisseur de consigne étant une valeur de consigne d'une épaisseur de l'adhésif à appliquer sur la première couche de tissu, et la largeur d'injecteur étant une largeur d'un orifice de distribution (86) suivant une direction qui coupe la direction d'introduction de tissu, l'orifice de distribution étant agencé sur l'injecteur (17) et étant une partie à travers laquelle l'adhésif peut être distribué,

dans lequel la partie de détermination de quantité à distribuer (201) détermine une quantité unitaire à distribuer sur la base de l'épaisseur de consigne et de la largeur d'injecteur acquises par la partie d'acquisition de paramètres (201) et de la vitesse d'introduction réelle détectée par la partie de détection (95, 96), la quantité unitaire à distribuer étant une quantité de l'adhésif à distribuer par unité de temps par l'injecteur (17).

**5.** Dispositif de soudage de tissu (1) selon la revendication 2 ou 4, dans lequel la partie de détection (95, 96) comporte un codeur (95, 96).

**6.** Dispositif de soudage de tissu (1) selon l'une quelconque des revendications 1 à 5, dans lequel :

la partie d'entrée (208) comporte une pédale (208) ; et
la partie de calcul de vitesse (201) calcule la vitesse d'introduction de consigne sur la base d'une distance sur laquelle la pédale (208) est appliquée vers le bas et de la limite supérieure de la vitesse d'introduction mémorisée dans le dispositif de mémorisation de vitesse (261).

**7.** Support pouvant être lu par un ordinateur (202) mémorisant un programme de commande d'un dispositif de soudage de tissu (1) comportant un injecteur (17) à partir duquel un adhésif peut être distribué sur une première couche de tissu et une partie d'introduction (22, 25) adaptée de manière à presser et à délivrer la première couche de tissu avec une seconde couche de tissu suivant une direction d'introduction de tissu coupant une direction suivant laquelle l'adhésif est distribué à partir de l'injecteur (17), des instructions étant mémorisées à l'intérieur du programme, de telle sorte que, lorsqu'elles sont exécutés sur un ordinateur (201) du dispositif de soudage de tissu (1), il exécute un procédé comprenant :

une étape de calcul de vitesse destinée à calculer, en tant que vitesse d'introduction de consigne, une valeur de consigne d'une vitesse d'introduction sur la base d'une valeur de réglage destinée à régler la vitesse d'introduction entrée à partir de la partie d'entrée (208) et d'une limite supérieure de la vitesse d'introduction mémorisée dans un dispositif de mémorisation de vitesse (261), la vitesse d'introduction étant une vitesse à laquelle la partie d'introduction (22, 25) délivre les première et seconde couches du tissu ;
une étape de commande d'introduction destinée à commander la partie d'introduction (22, 25) de telle sorte que la partie d'introduction (22, 25) délivre les première et seconde couches de tissu à la vitesse d'introduction de consigne calculée ;
une étape de détermination de quantité à distribuer destinée à déterminer une quantité à distribuer sur la base de la vitesse d'introduction de consigne calculée, la quantité à distribuer étant une quantité de l'adhésif à distribuer par l'injecteur (17) ; et
une étape de commande de distribution destinée à commander la distribution de la quantité à distribuer déterminée de l'adhésif par l'injecteur (17).

**8.** Support pouvant être lu par un ordinateur (202) selon la revendication 7, dans lequel :

le procédé comporte en outre une étape de détection destinée à détecter une vitesse d'introduction réelle, la vitesse d'introduction réelle étant une vitesse à laquelle la partie d'introduction (22, 25) délivre réellement les première et seconde couches de tissu sur la base de la vitesse d'introduction de consigne ; et
l'étape de détermination de quantité à distribuer détermine la quantité à distribuer sur la base de la vitesse d'introduction réelle détectée.

**9.** Support pouvant être lu par un ordinateur (202) selon la revendication 7, dans lequel :

le procédé comporte en outre une étape d'acquisition de paramètres destinée à acquérir une épaisseur de consigne et une largeur d'injecteur, l'épaisseur de consigne étant une valeur de consigne d'une épaisseur de l'adhésif à appliquer sur la première couche de tissu, et la largeur d'injecteur étant une largeur d'un orifice de distribution (86) suivant une direction qui coupe la direction d'introduction de tissu, l'orifice de distribution (86) étant formé sur l'injecteur (17) et étant une partie à travers laquelle l'adhésif peut être distribué ; et

l'étape de détermination de quantité à distribuer détermine une quantité unitaire à distribuer sur la base de l'épaisseur de consigne et de la largeur d'injecteur acquises à l'étape d'acquisition de paramètres et de la vitesse d'introduction de consigne calculée à l'étape de calcul de vitesse, la quantité unitaire à distribuer étant une quantité de l'adhésif à distribuer par unité de temps par l'injecteur (17).

10. Support pouvant être lu par un ordinateur (202) selon la revendication 8, dans lequel :

le procédé comporte en outre une étape d'acquisition de paramètres destinée à acquérir une épaisseur de consigne et une largeur d'injecteur, l'épaisseur de consigne étant une valeur de consigne d'une épaisseur de l'adhésif à appliquer sur la première couche de tissu, et la largeur d'injecteur étant une largeur d'un orifice de distribution (86) suivant une direction qui coupe la direction d'introduction de tissu, l'orifice de distribution (86) étant formé sur l'injecteur (17) et étant une partie à travers laquelle l'adhésif peut être distribué ; et l'étape de détermination de quantité à distribuer détermine une quantité unitaire à distribuer sur la base de l'épaisseur de consigne et de la largeur d'injecteur acquises à l'étape d'acquisition de paramètres et de la vitesse d'introduction réelle détectée à l'étape de détection, la quantité unitaire à distribuer étant une quantité de l'adhésif à distribuer par unité de temps par l'injecteur (17).

11. Support pouvant être lu par un ordinateur (202) selon l'une quelconque des revendications 7 à 10, dans lequel l'étape de calcul de vitesse calcule la vitesse d'introduction de consigne sur la base d'une distance sur laquelle une pédale (208) contenue sur la partie d'entrée est appliquée vers le bas et de la limite supérieure de la vitesse d'introduction mémorisée dans le dispositif de mémorisation de vitesse (261).

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

```
        ┌─────────────────────────────────┐
        │  ADHESIVE DISCHARGE PROCESSING  │
        └─────────────────────────────────┘
                        │
                        ▼
        ┌─────────────────────────────────┐
        │    ACQUIRE SETTING INFORMATION  │────S11
        └─────────────────────────────────┘
                        │
    ┌──────────────────►│
    │                   ▼
    │   ┌─────────────────────────────────┐
    │   │      ACQUIRE PEDAL VOLTAGE      │────S13
    │   └─────────────────────────────────┘
    │                   │
    │                   ▼
    │   ┌─────────────────────────────────┐
    │   │    CALCULATE TARGET FEED SPEED  │────S15
    │   └─────────────────────────────────┘
    │                   │
    │                   ▼
    │   ┌─────────────────────────────────┐
    │   │   CALCULATE UNIT DISCHARGE AMOUNT│────S17
    │   └─────────────────────────────────┘
    │                   │
    │                   ▼
    │   ┌─────────────────────────────────┐
    │   │  ROTATE UPPER & LOWER FEED ROLLERS│────S19
    │   └─────────────────────────────────┘
    │                   │
    │                   ▼
    │   ┌─────────────────────────────────┐
    │   │         DRIVE GEAR PUMP         │────S21
    │   └─────────────────────────────────┘
    │                   │
    │                   ▼          S23
    │              ╱─────────────╲
    │   YES       ╱   PEDAL        ╲
    └────────────◄   CONTINUOUSLY   ►
                 ╲  PRESSED DOWN?  ╱
                  ╲───────────────╱
                        │
                       NO
                        ▼
              ┌──────────────────┐
              │       END        │
              └──────────────────┘
```

# FIG. 13

ADHESIVE DISCHARGE PROCESSING

ACQUIRE SETTING INFORMATION — S31

ACQUIRE PEDAL VOLTAGE — S33

CALCULATE TARGET FEED SPEED — S35

ROTATE UPPER & LOWER FEED ROLLERS — S37

ACQUIRE ROTATION AMOUNTS — S39

CALCULATE UNIT DISCHARGE AMOUNT — S41

DRIVE GEAR PUMP — S43

S45
PEDAL CONTINUOUSLY PRESSED DOWN?

YES

NO

END

# FIG. 14

```
        ( ADHESIVE DISCHARGE PROCESSING )
                        |
                        v
        +-------------------------------+
        |   ACQUIRE SETTING INFORMATION |——S51
        +-------------------------------+
                        |
                        v
        +-------------------------------+
        |     ACQUIRE PEDAL VOLTAGE     |——S53
        +-------------------------------+
                        |
                        v
        +-------------------------------+
        |   CALCULATE TARGET FEED SPEED |——S55
        +-------------------------------+
                        |
                        v
        +-------------------------------+
        | ROTATE UPPER & LOWER FEED ROLLERS |——S57
        +-------------------------------+
                        |
                        v
        +-------------------------------+
        |    ACQUIRE ROTATION AMOUNT    |——S59
        +-------------------------------+
                        |
                        v
        +-------------------------------+
        |  CALCULATE UNIT DISCHARGE AMOUNT |——S61
        +-------------------------------+
                        |
                        v
        +-------------------------------+
        |        DRIVE GEAR PUMP        |——S63
        +-------------------------------+
                        |
                        v
        +-------------------------------+
        |    ACQUIRE ROTATION AMOUNTS   |——S65
        +-------------------------------+
                        |
                        v
                    S67  < ROTATION AMOUNTS  NO
                         <  NORMAL?        >————————+
                           YES                      |
                            |                       |
                           S69                      |
           YES    < PEDAL CONTINUOUSLY              |
         +--------<  PRESSED DOWN?    >             |
         |                  NO                      v
         |                  |              +------------------+
         |                  |              |  STOP ROTATION   |——S71
         |                  |              +------------------+
         |                  |                       |
         |                  |                      S73
         |                  |              +------------------------+
         |                  |              | DISPLAY FAILURE OCCURRENCE |
         |                  |              +------------------------+
         |                  v                       |
         |              ( END )<--------------------+
```

**EP 2 216 165 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008062301 A
- US 6902639 B1
- US 2006043102 A1